# EUROPÄISCHE PATENTSCHRIFT

(11) **EP 2 988 902 B1**
(45) Veröffentlichungstag und Bekanntmachung des Hinweises auf die Patenterteilung: **27.05.2020**
(21) Anmeldenummer: 13766519.6
(22) Anmeldetag: 23.09.2013
(51) Int. Cl.: B23K 11/00, B23K 11/28, B23K 11/34, B23K 28/02

(54) **SETZ-SCHWEISS-GERÄT, MODULARE KOMPONENTEN DAVON SOWIE EIN MIT IHM DURCHFÜHRBARES KONTINUIERLICHES VERBINDUNGSVERFAHREN**
SETTING WELDING DEVICE, MODULAR COMPONENTS THEREOF AND A CONTINUOUS CONNECTING METHOD THAT CAN BE CARRIED OUT WITH SUCH A DEVICE
APPAREIL DE PLACEMENT ET DE SOUDAGE, COMPOSANTS MODULAIRES DUDIT APPAREIL ET PROCÉDÉ D'ASSEMBLAGE EN CONTINU POUVANT ÊTRE MIS EN UVRE AU MOYEN DUDIT APPAREIL

(30) Priorität: 22.04.2013 DE 102013207284
(43) Veröffentlichungstag der Anmeldung: 02.03.2016
(73) Patentinhaber: Böllhoff Verbindungstechnik GmbH, 33649 Bielefeld (DE)
(72) Erfinder: DRAHT, Torsten, 33758 Schloß Holte-Stukenbrock (DE); HARTWIG-BIGLAU, Sergej, 32584 Löhne (DE); THOMMES, Holger, 54558 Strohn (DE)
(74) Vertreter: HWP Intellectual Property
(86) Internationale Anmeldenummer: PCT/EP2013/069754
(87) Internationale Veröffentlichungsnummer: WO 2014/173472

(56) Entgegenhaltungen:
- EP-A2- 1 767 792
- DE-A1-102004 025 492
- DE-A1-102008 044 451
- DE-A1-102011 114 306
- DE-B3- 10 352 727
- US-A- 3 624 340
- US-A- 4 766 283
- US-A- 5 773 783

## Beschreibung

### 1. Gebiet der Erfindung

Die vorliegende Erfindung betrifft ein kombiniertes Setz-Schweiß-Gerät, das ausgestaltet ist, um bolzenähnliche Schweißhilfsfügeteile in mindestens eine erste Materiallage zu setzen und an einer zweiten elektrisch leitenden Materiallage mechanisch-thermisch zu verformen und mit dieser durch einen Schweißvorgang stoffschlüssig zu verbinden. Des Weiteren betrifft vorliegende Erfindung ein mit diesem Setz-Schweiß-Gerät ausführbares kontinuierliches Verbindungsverfahren in Form eines mechanisch-thermischen Setz-Schweiß-Prozesses mithilfe eines bolzenähnlichen Schweißhilfsfügeteils.

### 2. Hintergrund der Erfindung

Das Schweißen ist ein weit verbreitetes Verfahren, um Bauteile aus schweißbarem Material, wie beispielsweise Stahl, miteinander zu verbinden. Beispielgebende Schweißverfahren sind das Widerstandspunktschweißen und das Bolzenschweißen, bei denen punktuell zwei sich gegenüberliegende Bauteile mittels Schweißen miteinander verbunden werden. Ein weiteres Schweißverfahren ist das Bolzenschweißen mit Lichtbogen.

In verschiedenen Industriezweigen müssen mittlerweile Bauteile miteinander verbunden werden, die teilweise aus nicht oder schlecht schweißbarem Material bestehen. Nichtsdestotrotz stellt das Schweißen ein effektives Verbindungsverfahren selbst für diese Bauteile aus nicht oder schlecht schweißbarem Material dar. Zu diesem Zweck wird ein Schweißhilfsfügeteil aus schweißbarem Material in dem Bauteil aus nicht oder schlecht schweißbarem Material befestigt. Nachfolgend wird eine Schweißverbindung zwischen einem Bauteil aus schweißbarem Material und dem Schweißhilfsfügeteil hergestellt, sodass das Bauteil aus schweißbarem Material und das Bauteil aus nicht oder schlecht schweißbarem Material über das Schweißhilfsfügeteil miteinander verbunden sind. Beispiele für Bauteile aus nicht oder schlecht schweißbarem Material sind Aluminiumbleche, Formteile aus Kunststoff oder faserverstärktem Kunststoff, beispielsweise kohlefaserverstärkter Kunststoff, um nur einige Beispiele zu nennen. Das oben beschriebene Verfahren geht beispielsweise aus der deutschen Patentanmeldung DE 100 15 713 A1 hervor.

Aus der deutschen Patentanmeldung 10 2005 006 253 A1 ist ein Verbindungsverfahren mittels Schweißen zwischen einem Bauteil aus nicht oder schlecht schweißbarem Material und einem Bauteil aus schweißbarem Material beschrieben. Hier wird ein Bolzen mit einem Schaft und einem Kopf aus schweißbarem Material in ein vorgefertigtes Loch in dem Bauteil aus nicht oder schlecht schweißbarem Material eingesetzt und nachfolgend mit dem Bauteil aus schweißbarem Material verschweißt. Um den Bolzen mit seinem Schaft verlässlich im vorgelochten Bereich des Bauteils aus nicht oder schlecht schweißbarem Material zu befestigen, wird der Schaft des Bolzens nach dem Schweißen lateral durch Stauchen verformt, sodass sich eine kraftschlüssige Verbindung zwischen dem Schaft des Bolzens und der Innenwand des Lochs des Bauteils ergibt. Aufgrund der Vielzahl der Verfahrensschritte ist das hier beschriebene Verbindungsverfahren technisch aufwändig und zeitintensiv.

In den deutschen Patentanmeldungen DE 10 2004 025 492 A1 und DE 10 2007 036 416 A1 werden jeweils Nieten, Bolzen oder Nägel als Schweißhilfsfügeteil in Bauteilen aus nicht oder schlecht schweißbarem Material gesetzt. Die Spitze des Schweißhilfsfügeteils ragt an der einen Seite des Bauteils aus nicht oder schlecht schweißbarem Material hervor und bildet einen Schweißpunkt mit sehr kleiner Kontaktfläche zum Kontaktieren des gegenüberliegenden Bauteils aus schweißbarem Material. Sobald das Schweißhilfsfügeteil und das Bauteil aus schweißbarem Material, beispielsweise mithilfe von Widerstandsschweißen in der Art des Widerstandspunktschweißens oder des Widerstandsbolzenschweißens, miteinander verbunden werden, wird die Spitze oder Schneide des Schweißhilfsfügeteils aufgeschmolzen, sodass sich eine sogenannte Schweißlinse ausbildet. Aufgrund der geringen Kontaktfläche zwischen Schweißhilfsfügeteil und Bauteil aus schweißbarem Material an der Spitze oder im Schneidbereich des Schweißhilfsfügeteils ist die Kontaktzone zum Schweißen relativ klein. Dies verlängert den Schweißvorgang oder verschlechtert die Schweißverbindung aufgrund der geringen Kontaktfläche im Vergleich zu einander gegenüberliegenden Bauteilen, die sich in einem größeren Bereich kontaktieren. Entsprechend dem kleinen Kontaktbereicht zwischen Schweißhilfsfügeteil und dem Bauteil aus schweißbarem Material fällt die sich ausbildende Schweißlinse klein aus. Dies beeinträchtigt u. a. die mechanische Belastbarkeit sowie die Lebensdauer der hergestellten Verbindung. Zudem wird bei der Nutzung eines Halbhohlstanzniets als Schweißhilfsfügeteil ein Abfallbutzen aus nicht oder schlecht schweißbarem Material erzeugt. Dieser befindet sich beim nachfolgenden Schweißen in der Schweißzone und im Bereich der Schweißlinse, sodass die entstehende Schweißverbindung durch diese Verschmutzung in ihrer Qualität beeinträchtigt wird.

Des Weiteren wird in der DE 10 2004 025 492 A1 als vorteilhaft angesehen, mithilfe des Setzvorgangs des Schweißhilfsfügeteils in dem Bauteil aus nicht oder schlecht schweißbarem Material das Bauteil aus schweißbarem Material im Kontaktbereich für das spätere Schweißen mechanisch zu deformieren. Im Speziellen dringt eine Spitze oder eine Schneide des Schweißhilfsfügeteils in das Bauteil aus schweißbarem Material ein oder erzeugt in diesem Bauteil aus schweißbarem Material eine Vertiefung. Diese Vertiefung soll dann die Ausbildung einer ausreichend großen Schweißlinse während des Widerstandsschweißens zwischen dem Schweißhilfsfügeteil und dem Bauteil aus schweißbarem Material im Bereich dieser Senke bzw. Vertiefung unterstützen. Zur Verwirklichung dieses Verfahrens ist es jedoch erforderlich, bereits alle miteinander zu verbindenden Bauteile übereinander anzuordnen, bevor das Schweißhilfsfügeteil gesetzt wird. Andernfalls ist ein zusätzlicher Arbeitsaufwand erforderlich, um die Vertiefung im Bauteil aus schweißbarem Material zu erzeugen und gegenüber den bereits gesetzten Schweißhilfsfügeteilen auszurichten. Dies ist aufwändig, zeitintensiv, erfordert zudem zusätzlichen apparativen Aufwand zur genauen Positionierung der miteinander zu verbindenden Bauteile und ist in der Wahl der möglichen Schweißverfahren und der Prozessabfolgen limitiert.

DE 100 60 390 A1 beschreibt ein Stanznietverfahren, bei dem ein Stanzniet mithilfe eines Elektrodenstempels durch ein erstes elektrisch nicht leitendes Material, wie beispielsweise Kunststoff, hindurch getrieben und mit einem zweiten, auf einer Elektrodenmatrize aufliegenden elektrisch leitenden Material verbunden wird. Elektrodenstempel und Elektrodenmatrize sind an entgegensetzte Pole einer Spannungsquelle angeschlossen. Sobald der Stanzniet das erste Material durchdrungen hat und im Kontakt mit dem zweiten elektrisch leitenden Material steht, findet ein Stromfluss durch den Stanzniet statt. Da sich der Stanzniet aufgrund des Stromflusses erwärmt, wird dadurch der weitere Fügeprozess des Stanzniets unterstützt. Da in dem hier beschriebenen Stanznietverfahren Hohl-, Halbhohl- oder Vollnieten eingesetzt werden, treibt der Stanzniet während seines Fügevorgangs durch das erste elektrisch nicht leitende Material Abfallmaterial vor sich her. Dieses Abfallmaterial behindert einen elektrischen Kontakt zwischen Stanzniet und zweitem Material und somit den Stromfluss durch den Stanzniet. Zudem ist es von Nachteil, dass der Stanzniet das elektrisch nicht leitende Material im Kaltzustand durchdringt, was gerade in spröden Kunststoffen und ähnlichen Materialen Rissbildung und andere Versagensmechanismen initiieren.

DE 10 2010 020 569 A1 beschreibt ein thermisches Fügen eines ersten elektrisch nicht leitenden Bauelements mit einem zweiten elektrisch leitenden Bauelement basierend auf einer elektrischen Erwärmung. Zu diesem Zweck wird zunächst in das elektrisch nicht leitende Bauteil ein Fügehilfsmittel eingeformt, welches aus einem elektrisch leitenden Material besteht. In einem dem Verbindungsverfahren vorgeschalteten Installationsprozess wird das Fügehilfsmittel mittels Anwalzen, Einprägen, Gesenkformen, Eindrücken, Tiefen oder Kleben in dem ersten Bauteil befestigt. Das Fügehilfsmittel stellt den elektrisch leitfähigen Anlagekontakt für das nachfolgende elektrisch-thermische Verschweißen mit dem zweiten Bauteil bereit. Zu diesem Zweck werden das erste Bauteil mit dem Fügehilfsmittel und das zweite Bauteil zwischen einander gegenüberliegendem Elektrodenstempel und einer Elektrodenmatrize positioniert. Ein elektrischer Stromfluss durch das Fügehilfsmittel und das elektrisch leitende zweite Bauteil zwischen Elektrodenstempel und Elektrodenmatrize führt zu einem Verschweißen des Fügehilfsmittels und des zweiten Bauteils an den aneinander anliegenden Grenzflächen. Auch das hier beschriebene thermische Fügeverfahren hat seinen Nachteil darin, dass zunächst in einem vorgeschalteten Verfahren ein Hilfsfügemittel in dem ersten Bauteil aus elektrisch nicht leitendem Material befestigt werden muss. Daher sind an dieser Stelle verschiedene Verarbeitungsschritte des Hilfsfügemittels und des ersten Bauteils erforderlich, bevor das erste Bauteil und das zweite Bauteil zwischen Elektrodenstempel und Elektrodenmatrize miteinander verbunden werden könnten.

EP 0 947 279 B1 beschreibt eine Schweißzange zum Widerstandsschweißen von Blechlagen. Diese Schweißzange umfasst eine Schweißstromquelle, ein an diese Schweißstromquelle angeschlossenes Schweißstrom-Regelgerät sowie einen lokalen Datenspeicher, in dem Prozessdaten der Schweißzange speicherbar sind. Für den Datentransfer weist das Schweißstrom-Regelgerät Datenschnittstellen auf, über die gespeicherte Programme aus einem Programmspeicher an das Schweißstrom-Regelgerät übertragbar sind. Des Weiteren sind über derartige Schnittstellen erfasste Betriebsdaten der Schweißzange an einen Speicher übertragbar, wo sie permanent oder temporär hinterlegt werden. Bekannte Schweißzangen und ihre Betriebsverfahren sind darauf gerichtet, mehrere Materiallagen aus schweißbarem Material miteinander zu verbinden. Dieser Ansatz ist jedoch unter heutigen Gestaltungsgesichtspunkten nicht mehr ausreichend, da zunehmend nicht oder schlecht schweißbare Materialien beim Verbinden mehrerer Materiallagen vorhanden sind.

Es ist daher die Aufgabe vorliegender Erfindung, alternative Vorrichtungen und Verbindungsverfahren bereitzustellen, mit denen Lagen aus nicht oder schwer schweißbarem Material mit Lagen aus schweißbarem Material verbunden werden können.

### 3. Zusammenfassung der Erfindung

Die oben genannte Aufgabe wird durch ein kombiniertes Setz-Schweiß-Gerät gemäß dem unabhängigen Patentanspruch 1, einen Nachrüstsatz für ein Setzgerät gemäß dem unabhängigen Patentanspruch 12, ein kontinuierliches Verbindungsverfahren in Form eines mechanisch-thermischen Setz-Schweiß-Prozesses mithilfe eines bolzenähnlichen Schweißhilfsfügeteils gemäß dem unabhängigen Patentanspruch 14 und ein Vorbereitungsverfahren für ein Schweißen zwischen Schweißhilfsfügeteil und einem Bauteil aus schweißbarem Material oder mit einem Abschnitt aus schweißbarem Material gemäß dem unabhängigen Patentanspruch 20 gelöst. Vorteilhafte Ausgestaltungen und Weiterentwicklung vorliegender Erfindung gehen aus der folgenden Beschreibung, den Zeichnungen sowie den abhängigen Patentansprüchen hervor.

Das erfindungsgemäße kombinierte Setz-Schweiß-Gerät ist ausgestaltet, um bolzenähnliche Schweißhilfsfügeteile in mindestens eine erste Materiallage zu setzen und an einer zweiten Materiallage aus elektrisch leitendem Material oder an einem elektrisch leitenden Bereich der zweiten Materiallage mechanisch-thermisch zu verformen und mit dieser durch einen Schweißvorgang im Kontaktbereich stoffschlüssig zu verbinden. Dazu weist das erfindungsgemäße kombinierte Setz-Schweiß-Gerät die folgenden Merkmale auf: einen angetriebenen Stempel, der mit einer Setzkraft von mindestens 5 kN, vorzugsweise mindestens 8 kN, gegen ein gegenüberliegend angeordnetes Gegenlager bewegbar ist, während der Stempel und das Gegenlager elektrisch leitend und mit einer elektrischen Stromquelle verbindbar ausgebildet sind, sodass der Stempel und das Gegenlager jeweils eine Schweißelektrode bilden, ein elektronisches Steuerungssystem des Setz-Schweiß-Geräts mit einer kombinierten Steuer- und/oder Regeleinrichtung, sodass kombinierte mechanische und elektrische Lasten über den Stempel und das Gegenlager am Schweißhilfsfügeteil generierbar sind, die ein mechanisch und thermisch unterstütztes Durchdringen der mindestens einen ersten Materiallage und ein flächiges Verschweißen mit der zweiten Materiallage gewährleisten.

Das erfindungsgemäße kombinierte Setz-Schweiß-Gerät integriert in ein Setzgerät die Möglichkeit einer thermischen Vorbearbeitung des Schweißhilfsfügeteils und/oder ausgewählter Bereiche der miteinander zu verbindenden Materiallagen. Zudem werden die operativen Voraussetzungen zur Durchführung eines Schweißverfahrens, vorzugsweise das Widerstandsschweißen, in dem Setzgerät realisiert, sodass das Schweißhilfsfügeteil schweißend an der Oberfläche der zweiten Materiallage befestigbar ist. Zu diesem Zweck sind Stempel und Gegenlager als Schweißelektroden ausgebildet, sodass ein ausreichend großer Schweißstrom zwischen Stempel und Gegenlager über das Schweißhilfsfügeteil generierbar ist. Um das Herstellen einer Verbindung vorzubereiten, wird ein über das Schweißhilfsfügeteil fließender Strom zur Erwärmung des Schweißhilfsfügeteils sowie an das Schweißhilfsfügeteil angrenzender Bereiche einer oder mehrerer Materiallagen verwendet. Während dieser erwärmende elektrische Strom einerseits zwischen Stempel und Gegenelektrode über das Schweißhilfsfügeteil fließen kann, ist es ebenfalls bevorzugt, dass der Strom zwischen Stempel, Schweißhilfsfügeteil und einem an das Schweißhilfsfügeteil angrenzenden Niederhalter fließt. Da in diesem Fall kein direkter elektrischer Stromfluss in den miteinander zu verbindenden Materiallagen stattfindet, werden ausgewählte Bereiche der Materiallagen über das Schweißhilfsfügeteil erwärmt. Der letztere Fall findet gerade dann Anwendung, wenn das an das Schweißhilfsfügeteil angrenzende Material elektrisch nicht leitend ist.

Obwohl das erfindungsgemäße kombinierte Setz-Schweiß-Gerät Setzkräfte im kN-Bereich erzeugt, dienen die elektrischen Belastungen des Schweißhilfsfügeteils zur Erzeugung von Wärme, um den Setzvorgang des Schweißhilfsfügeteils in der mindestens einen ersten Materiallage zu erleichtern. Des Weiteren wird durch die kombinierte mechanische und thermische Belastung während des Setzvorgangs in der mindestens einen ersten Materiallage ein gezieltes Umformen des Schweißhilfsfügeteils durchgeführt. Denn während des Setzvorgangs findet aufgrund der thermischen Aufweichung des Schweißhilfsfügeteils und/oder des angrenzenden Bereichs der ersten Materiallage eine formgebende Vorbereitung des späteren Verschweißens des Schweißhilfsfügeteils mit der zweiten Materiallage statt. Dies gewährleistet, dass das Schweißhilfsfügeteil in die mindestens eine erste Materiallage gesetzt, vorbereitend umgeformt und abschließend flächig mit der zweiten Materiallage mittels Schweißen befestigt wird, ohne dass ein Setzen bzw. Fügen in die zweite Materiallage erfolgt. Diese Vorgänge laufen kontinuierlich ab, sodass sie insgesamt ein zeiteffizientes Verbindungsverfahren darstellen.

Erfindungsgemäß bevorzugt ist der Stempel über einen elektrischen, hydraulischen oder pneumatischen Antrieb bewegbar. Des Weiteren ist ein Kraftsensor vorgesehen, der eine Kraft des Stempels auf das Schweißhilfsfügeteil erfasst und/oder mittels eines elektrischen Referenzsignals an eine Erfassungseinrichtung für mechanische und elektrische Prozessdaten des elektronischen Steuerungssystems weiterleitet. Gemäß einer weiteren bevorzugten Ausgestaltung umfasst das elektronische Steuerungssystem des Setz-Schweiß-Geräts eine Schweißeinrichtung, mit der ein steuerbarer oder regelbarer Schweißstrom zwischen Stempel und Gegenlager generierbar ist.

Gemäß einer weiteren bevorzugten Ausführungsform vorliegender Erfindung umfasst das elektronische Steuerungssystem eine Erwärmungseinrichtung, mit der eine einstellbare Erwärmung des Schweißhilfsfügeteils und mindestens eines Teilbereichs der Materiallagen zwischen Stempel und Gegenlager erzeugbar ist. Diese Erwärmungseinrichtung ist bspw. dann von Vorteil, wenn Wärme mithilfe elektromagnetischer Induktion oder durch direkte Einstrahlung von Wärmestrahlung oder heißer Luft im Schweißhilfsfügeteil und in den angrenzenden Materiallagen erzeugt wird. Es ist natürlich ebenfalls bevorzugt, mithilfe der Erwärmungseinrichtungs einen gezielten elektrischen Stromfluss innerhalb des Schweißhilfsfügeteils zu generieren, sodass sich dieses erwärmt. Gemäß einer weiteren bevorzugten Ausgestaltung des Setz-Schweiß-Geräts ist eine Erfassungseinrichtung mit einer Mehrzahl von Messeinrichtungen vorgesehen, mit denen elektrische und mechanische Prozessdaten des Setz-Schweiß-Geräts, vorzugsweise Strom, Spannung, Leistung, Widerstand, Kraft, Stempelweg, Temperatur, erfassbar und an die Erfassungseinrichtung des Setz-Schweiß-Geräts übertragbar sind. Des Weiteren ist erfindungsgemäß bevorzugt eine Auswerteeinrichtung vorgesehen, mit der die mechanischen und elektrischen Prozessdaten auswertbar, mit Referenzkurven und/oder Kennwerttabellen vergleichbar und Korrekturwerte ermittelbar sind.

Basierend auf einer vorzugsweise kontinuierlichen Erfassung von mechanischen und elektrischen Prozessdaten während des Betriebs des Setz-Schweiß-Geräts sind der Setzvorgang des Schweißhilfsfügeteils in der mindestens einen ersten Materiallage, das dabei stattfindende Umformen des Schweißhilfsfügeteils sowie angrenzender Materialbereiche der Materiallage zur Vorbereitung des nachfolgenden Schweißens, vorzugsweise Widerstandsschweißen, sowie das abschließende Schweißen zum Verbinden des Schweißhilfsfügeteils mit der zweiten Materiallage optimal aufeinander abstimmbar. Zudem gewährleistet die Erfassung der mechanischen und elektrischen Prozessdaten ein Lernen des Setz-Schweiß-Geräts, sodass eine ständige Optimierung von Betriebsparametern des Setz-Schweiß-Geräts stattfindet. Basierend auf der Ermittlung von Referenzkurven und dem Betrieb des Setz-Schweiß-Geräts im Vergleich mit diesen Referenzkurven und/oder Kennwerttabellen ist vorzugsweise ein Regeln der mechanischen und elektrischen Prozessgrößen des Setz-Schweiß-Geräts möglich. Entsprechend weist vorzugsweise die Steuer-Regel-Einrichtung anpassbare Steuerkurven für die mechanischen und elektrischen Prozessdaten von dem Stempel und dem Gegenlager auf, die in Abhängigkeit von den erfassten mechanischen und elektrischen Prozessdaten der Erfassungseinrichtung regelbar sind.

Gemäß einer weiteren bevorzugten Ausgestaltung umfasst die Steuer- und/oder Regel-Einrichtung (im weiteren Steuer-Regel-Einrichtung) eine adaptive Kraftregelung des Stempels, sodass mithilfe eines Kraftsensors die am Stempel anliegende Kraft erfasst und mit einem Kennwert vergleichbar ist, sodass ausgehend von dem Vergleich eine Korrekturkraft nachsteuerbar ist. Diese adaptive Kraftregelung findet vorzugsweise Anwendung, um Unebenheiten der aufeinander liegenden Materiallagen oder die Wirkung von Klebstoffschichten zwischen übereinander angeordneten Materiallagen ausgleichen zu können. Denn die oben beschriebenen Gegebenheiten verfälschen die tatsächlich durch den Stempel aufgebrachte Kraft, was zur Erzeugung fehlerhafter Verbindungen führen kann. Daher werden mithilfe der adaptiven Kraftregelung Korrekturkräfte ermittelt und in das laufende Verbindungsverfahren eingeführt, sodass die gewünschte Verbindungsqualität nach Abschluss des Setz-Schweiß-Vorgangs gewährleistet ist.

Vorzugsweise weist das Setz-Schweiß-Gerät zudem eine Zuführeinrichtung für Schweißhilfsfügeteile auf, mit der Schweißhilfsfügeteile einzeln einer Fügeposition oder Setzposition unter dem als Elektrode ausgestalteten Stempel zuführbar sind. Gemäß einer Ausgestaltungsmöglichkeit der Zuführeinrichtung ist ein Niederhalter vorgesehen, der federnd oder mit einer steuerbaren Kraft angetrieben auf die erste Materiallage aufsetzbar ist.

Gemäß einer weiteren bevorzugten Ausführungsform vorliegender Erfindung sind die Zuführeinrichtung, die Schweiß- und/oder Erwärmungseinrichtung und das Steuer-Regel-Modul des Setz-Schweiß-Geräts modular ausgebildet, sodass sie jeweils mit dem Setz-Schweiß-Gerät oder mit einer bekannten Schweißzange oder einem bekannten Setzgerät kombinierbar sind.

In Anlehnung an die oben beschriebene modulare Bauweise umfasst vorliegende Erfindung ebenfalls einen Nachrüstsatz mit einer modularen Steuer-Regel-Einrichtung, die mit einem Setzgerät kombinierbar ist. Dieser Nachrüstsatz weist, neben der Steuer-Regel-Einrichtung, die folgenden Elemente auf: eine Erfassungseinrichtung für mechanische und elektrische Prozessdaten, eine Schweißeinrichtung, mit der eine Schweißverbindung über einen Stempel und ein Gegenlager des Setzgeräts herstellbar ist, und eine Erwärmungseinrichtung. Optional ist eine Zuführeinrichtung für Schweißhilfsfügeteile in Kombination mit einem Niederhalter vorgesehen.

Beispielhaft wird eine modulare Zuführeinrichtung für Schweißhilfsfügeteile beschrieben, die mit einem Setzgerät oder einer Schweißzange kombinierbar ist und die die folgenden Merkmale aufweist: eine Schweißeinrichtung, mit der eine Schweißverbindung über einen Stempel und ein Gegenlager, vorzugsweise ein Elektrodenstempel und ein Elektrodengegenlager, des Setzgeräts oder der Schweißzange herstellbar ist, und eine Erwärmungseinrichtung, mit der ein Schweißhilfsfügeteil und/oder ein Teilbereich einer von Materiallage erwärmbar ist, und einen federnden oder angetriebenen Niederhalter.

Die oben beschriebene modulare Steuer-Regel-Einrichtung sowie die modulare Zuführeinrichtung eröffnen die Möglichkeit, bekannte Setzgeräte und/oder Schweißzangen derart zu ergänzen, dass mit diesen bekannten Vorrichtungen ein kombiniertes Setz-SchweißVerfahren realisierbar ist. Zu diesem Zweck ist neben der gezielten Zufuhr von Schweißhilfsfügeteilen die Ansteuerung oder Regelung von mechanischen und elektrischen Betriebsparametern des Setzgeräts oder der Schweißzange erforderlich. Ein derartiger Betrieb ist nur mithilfe der entsprechenden Schweißeinrichtung realisierbar. Erfindungsgemäß wird daher die modulare Steuer-Regel-Einrichtung als Zusatzoption oder als Nachrüstsatz für Setzgeräte vorgesehen. Die modulare Zuführeinrichtung kann mit einer Erfassungseinrichtung für elektrische und mechanische Prozessdaten, einer Auswerteeinrichtung sowie mit einer Datenschnittstelle zu einem elektronischen Steuerungssystem des Setzgeräts oder der Schweißzange verbunden werden.

Vorliegende Erfindung umfasst zudem ein kontinuierliches Verbindungsverfahren in Form eines mechanisch-thermischen Setz-Schweiß-Prozesses mithilfe eines bolzenähnlichen Schweißhilfsfugeteils für mindestens eine erste Materiallage ohne Vorlochen der mindestens einen ersten Materiallage mit mindestens einer zweiten Materiallage aus schweißbarem Material oder mit einem Abschnitt aus schweißbarem Material. Das kontinuierliche Verbindungsverfahren weist die folgenden Schritte auf: Eintreiben des Schweißhilfsfügeteils in die mindestens eine erste Materiallage unter einer kombinierten mechanisch-thermischen Belastung zumindest des Schweißhilfsfügeteils, Deformieren des Schweißhilfsfügeteils unter kombinierter mechanisch-thermischer Belastung an der mindestens einen zweiten Materiallage und flächiges Verschweißen des Schweißhilfsfügeteils mit der mindestens einen zweiten Materiallage, sodass die mindestens eine erste Materiallage und die mindestens eine zweite Materiallage über das Schweißhilfsfügeteil miteinander verbunden sind, wobei während des Eintreibens, Deformierens und Verschweißens des Schweißhilfsfügeteils die durch den Stempel und das Gegenlager, vorzugsweise den Elektrodenstempel, auf das Schweißhilfsfügeteil aufgebrachte Kraft und der über den Elektrodenstempel im Schweißhilfsfügeteil erzeugte elektrische Strom mithilfe von anpassbaren überlagerten Kraft- und Stromkennlinien in Abhängigkeit von der Zeit vorgegeben sind, um das Verbindungsverfahren kontinuierlich zu steuern.

Während des erfindungsgemäßen kontinuierlichen Verbindungsverfahrens werden bevorzugt kombinierte mechanische und elektrische Lasten auf das Schweißhilfsfügeteil und die miteinander zu verbindenden Materiallagen aufgebracht. Die elektrische Belastung des Schweißhilfsfügeteils erzeugt Wärme, die das Eintreiben des Schweißhilfsfügeteils in die mindestens eine erste Materiallage unterstützt. Die auf diese Weise elektrisch oder mithilfe anderer Wärmequellen im Schweißhilfsfügeteil und den benachbarten Materiallagen erzeugte Wärme führt zu einem Aufweichen des Materials des Schweißhilfsfügeteils und/oder des Materials zumindest der ersten Materiallage, sodass eine geringere Kraft des Stempels während des Eintreibens des Schweißhilfsfügeteils erforderlich ist. Dabei wird die zugeführte bzw. erzeugte Wärmemenge derart eingestellt, dass es nicht zu einem Schmelzen des Materials des Schweißhilfsfügeteils und der Materiallagen kommt. Somit wird vorzugsweise während des Deformierens und Umformens des Schweißhilfsfügeteils die Schmelztemperatur des Materials nicht erreicht.

Die erfindungsgemäße Kombination aus einem mechanischen Eintreib- oder Setzschritt mit einem das Eintreiben des Schweißhilfsfügeteils erleichternden Erwärmungsschritt führt zusätzlich zu einem aktiven Umformen des Schweißhilfsfügeteils in Vorbereitung des bevorstehenden Schweißprozesses. Die Wärmezufuhr zum Schweißhilfsfügeteil und zur mindestens einen angrenzenden Materiallage sowie die Krafteinwirkung und Bewegung des Schweißhilfsfügeteils während des Eintreibens in die mindestens eine erste Materiallage führen zu einem effizienten Umformen des Schweißhilfsfügeteils in Vorbereitung des bevorzugten Widerstandsschweißens. Dieses aktive Umformen unter kombinierten mechanischen und thermischen Belastungen profitiert auch vom Auftreffen des Schweißhilfsfügeteils auf die zweite Materiallage während des Eintreibens. Vorzugsweise wird dabei das Schweißhilfsfügeteil an der zweiten Materiallage gestaucht, sodass es zu einer vorteilhaften Vergrößerung der Grenzfläche zwischen Schweißhilfsfügeteil und der zweiten Materiallage kommt. Diese Grenzflächenvergrößerung unterstützt die spätere Ausbildung einer in ihrer flächigen Größe passend eingestellten Schweißlinse und der darauf aufbauenden Schweißverbindung zwischen dem Schweißhilfsfügeteil und der Oberfläche der zweiten Materiallage.

Für einen effizienten Ablauf des erfindungsgemäßen Verbindungsverfahrens werden vorzugweise die Kraft-Zeit/Weg-Kennlinie des Stempels sowie die Strom-Zeit/Weg-Kennlinie zur Wärmeerzeugung im Schweißhilfsfügeteil aufeinander abgestimmt, um eine energetische Überlastung des Materials des Schweißhilfsfügeteils und/oder des Materials der an das Schweißhilfsfügeteil angrenzenden Materiallagen zu vermeiden. Gleichzeitig dient diese Abstimmung dem Einstellen optimierter Parameter für die Phasen "Eintreiben" und "Deformieren" bezogen auf Werkstoffeigenschaften des Schweißhilfsfügeteils und der Materiallagen. Entsprechend sind die Kraft-Kennlinie und die Strom-Kennlinie derart ausgestaltet, dass während des Deformierens die Kraft des Elektrodenstempels reduziert und der im Schweißhilfsfügeteil fließende Strom erhöht wird, sodass unter einer mechanischen Grundlast eine Formanpassung zwischen dem Schweißhilfsfügeteil und den angrenzenden Materiallagen im bereits oben genannten Umformschritt stattfindet.

In weiterer Ausgestaltung umfasst das Verbindungsverfahren vorzugsweise die weiteren Schritte: Erfassen von mechanischen und elektrischen Prozessdaten, insbesondere Kraft, Stempelweg, elektrische Spannung, elektrischer Strom, Vergleichen der erfassten Prozessdaten mit vorgegebenen Referenzkurven und/oder Kennwerttabellen und Bestimmen von Steuerwerten für an dem Schweißhilfsfügeteil aufgebrachte mechanische und elektrische Lasten basierend auf dem Vergleich zwischen den erfassten Prozessdaten und den Referenzkurven und/oder Kennwerttabellen zur gezielten Einstellung der mechanisch-thermischen Belastung am Schweißhilfsfügeteil.

Auf Grundlage der gezielten Einstellung und Veränderung der Betriebsparameter des Setz-Schweiß-Geräts findet somit vorzugsweise das bereits oben beschriebene Umformen zumindest eines Spitzen- und/oder Schaftbereichs des Schweißhilfsfügeteils während des Eintreibens und Deformierens des Schweißhilfsfügeteils statt, sodass das Schweißhilfsfügeteil für das nachfolgende flächige Verschweißen mit der mindestens einen zweite Materiallage vorbereitet ist. Auf dieser Verfahrensgrundlage wird während des Umformens ein für ein Widerstandsschweißverfahren ausreichend großer Grenzflächenbereich zwischen der mindestens einen zweiten Materiallage und dem umgeformten Spitzenbereich des Schweißhilfsfügeteils erzeugt, in dem während des Verschweißens die Schweißzone entsteht.

In Anlehnung an das oben beschriebene kontinuierliche Verbindungsverfahren umfasst vorliegende Erfindung ebenfalls ein Vorbereitungsverfahren für ein Schweißverfahren zwischen einem Schweißhilfsfügeteil und einer Materiallage aus schweißbarem Material oder einer Materiallage mit einem Abschnitt aus schweißbarem Material. Dieses Vorbereitungsverfahren weist die folgenden Schritte auf: gezieltes Umformen zumindest eines Spitzen- und/oder Schaftbereichs des Schweißhilfsfügeteils während des Eintreibens und Deformierens des Schweißhilfsfügeteils unter kombinierten mechanisch-thermischen Belastungen, sodass das Schweißhilfsfügeteil für das nachfolgende flächige Verschweißen mit der mindestens einen zweiten Materiallage vorbereitet ist. Das Vorbereitungsverfahren stellt daher einen ausgewählten Abschnitt des oben beschriebenen kontinuierlichen Verbindungsverfahrens dar, das in bekannte Setzverfahren integrierbar und mit einem abschließenden Schweißverfahren kombinierbar ist.

Erfindungsgemäß bevorzugt wird während des Umformens des Vorbereitungsverfahrens ein für ein Widerstandsschweißverfahren ausreichend großer Grenzflächenbereich zwischen der mindestens einen zweiten Materiallage und dem vorgeformten Spitzenbereich des Schweißhilfsfügeteil erzeugt. Dieser Grenzenflächenbereich unterstützt die Ausbildung einer flächigen Schweißlinse im späteren Schweißverfahren.

### 4. Kurze Beschreibung der begleitenden Zeichnungen

Vorliegende Erfindung wird unter Bezugnahme auf die in den begleitenden Zeichnungen dargestellten bevorzugten Ausführungsformen der Erfindung näher erläutert. Es zeigen:
- Figur 1A: eine schematische Darstellung einer bevorzugten Ausführungsform des erfindungsgemäßen Setz-Schweiß-Geräts,
- Figur 1B: eine schematische Darstellung einer weiteren bevorzugten Ausführungsform des erfindungsgemäßen Setz-Schweiß-Geräts,
- Figur 2: eine sequentielle Darstellung einer bevorzugten Ausführungsform des Verbindungsverfahrens sowie des entsprechenden Kennlinienverlaufs,
- Figur 3: eine weitere sequentielle Darstellung einer bevorzugten Ausführungsform des Verbindungsverfahrens sowie des entsprechenden Kennlinienverlaufs,
- Figur 4: ein Flussdiagramm einer bevorzugten Ausführungsform des Verbindungsverfahrens.

### 5. Detaillierte Beschreibung der bevorzugten Ausführungsformen

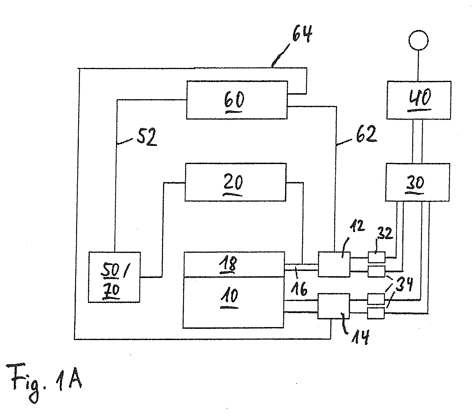

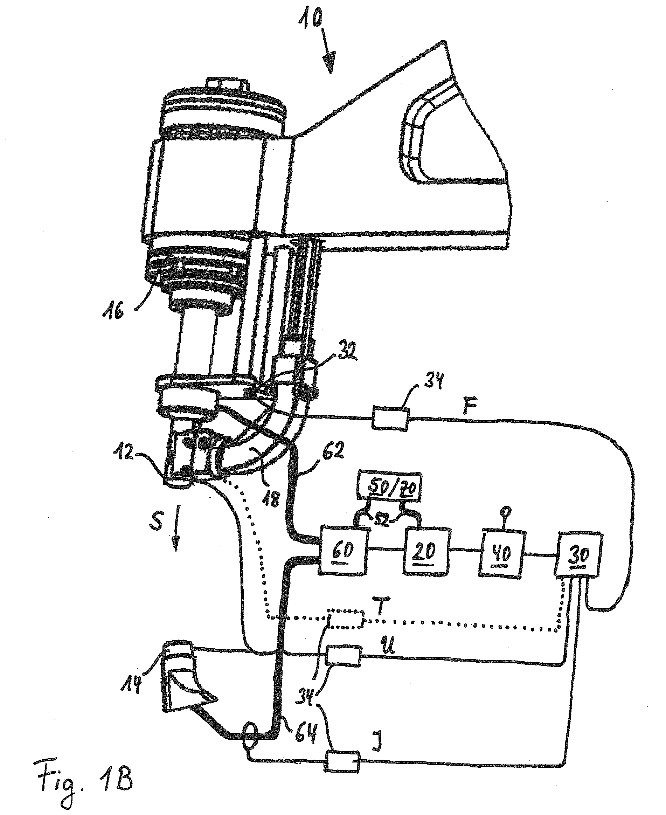

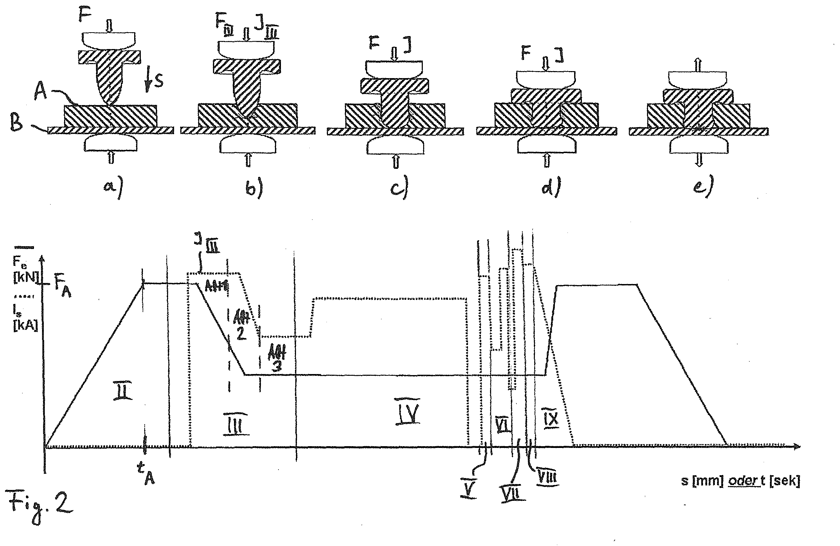

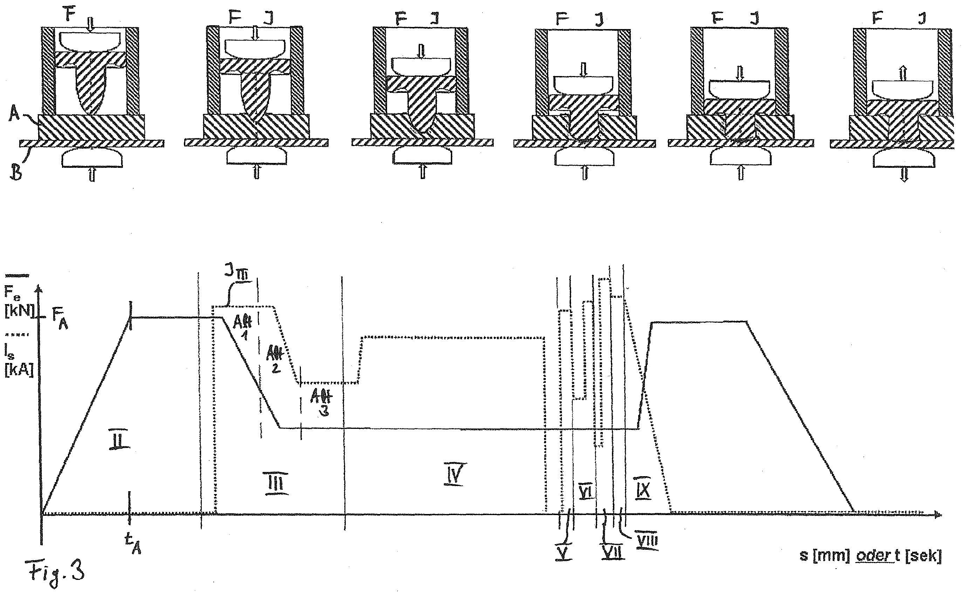

Figur 1A zeigt schematisch eine bevorzugte Ausführungsform eines erfindungsgemäßen Setz-Schweiß-Geräts 10, das fest installiert, über einen Roboterarm bewegbar angeordnet oder als ein mobiles Setz-Schweiß-Gerät 10 konstruiert ist. Mit dem Setz-Schweiß-Gerät 10 werden bolzenähnliche Schweißhilfsfügeteile (siehe Fig. 2 und 3) in mindestens eine erste Materiallage A unter kombinierten mechanischen und elektrischen Lasten an Stempel und Gegenlager des Setz-Schweiß-Geräts 10 eingetrieben bzw. gesetzt. Derartige Schweißhilfsfügeteile und ihre Konstruktion sind ausführlich in DE 10 2012 018 866 beschrieben, worauf ausdrücklich Bezug genommen wird. Die elektrischen Lasten erzeugen einen Stromfluss im Schweißhilfsfügeteil, sodass sich dieses erwärmt. Diese zur mechanischen Belastung zusätzliche thermische Belastung des Schweißhilfsfügeteils und der an das Schweißhilfsfügeteil angrenzenden Bereiche der mindestens einen ersten Materiallage A unterstützt das Eintreiben des Schweißhilfsfügeteils in die mindestens eine erste Materiallage A. Eine Darstellung einer weiteren bevorzugten Ausführungsform des Setz-Schweiß-Geräts 10 ist in Fig. 1B gezeigt.

Das Schweißhilfsfügeteil wird nicht in die zweite Materiallage B aus schweißbarem Material oder mit Abschnitten aus schweißbarem Material gesetzt, gefügt oder eingetrieben. An der Oberfläche der zweiten Materiallage B erfolgt ein flächiges Verschweißen des Schweißhilfsfügeteils, vorzugsweise mittels Widerstandsschweißen. Auf diese Weise werden die mindestens eine erste Materiallage A und die zweite Materiallage B über das Schweißhilfsfügeteil in einem kombinierten kontinuierlichen Setz-Schweiß-Prozess miteinander verbunden. Während des Betriebs des Setz-Schweiß-Geräts 10 wird das bolzenähnliche Schweißhilfsfügeteil mithilfe einer Zuführeinrichtung 18 einzeln einer Fügeposition unter dem Stempel 12 (gesehen in Fügerichtung) des Setz-Schweiß-Geräts 10 zugeführt. Vorzugsweise umfasst die Zuführeinrichtung 18 einen Niederhalter NH, der mithilfe einer Feder oder einem anderen geeigneten Antrieb auf die übereinander angeordneten Materiallagen A, B drückt. Vorzugsweise drückt der Niederhalter NH mit einer steuerbaren Kraft auf die erste Materiallage A, sodass Zwischenräume zwischen den aufeinander angeordneten Materiallagen A, B weitestgehend geschlossen werden und die Materiallagen A, B in ihrer Bearbeitungsposition zwischen Stempel 12 und Gegenlager 14 fixiert sind.

Das Setz-Schweiß-Gerät 10 umfasst den bereits oben erwähnten Stempel 12 und das gegenüber dem Stempel 12 angeordnete Gegenlager 14. Der Stempel 12 und das Gegenlager 14 können sowohl mechanische wie auch elektrische Belastungen in dem Schweißhilfsfügeteil erzeugen, indem sie als Elektrodenstempel und Elektrodengegenlager ausgeführt sind. Die Bewegung des Stempels 12 und somit die auf das Schweißhilfsfügeteil aufgebrachte Kraft erzeugt ein Antrieb 16. Dieser Antrieb 16 ist gemäß unterschiedlichen bevorzugten Ausführungsformen, pneumatisch, elektrisch oder hydraulisch realisiert. Zudem wird der Antrieb 16 über eine Steuer-- und/oder Regeleinrichtung 20 (im Weiteren Steuer-Regel-Einrichtung 20) angesteuert.

Über Stromleitungen 62, 64 werden der Stempel 12 und das Gegenlager 14 mit einem elektrischen Strom versorgt. Da der Stempel 12 und das Gegenlager 14 aus elektrisch leitendem Material bestehen, werden die am Stempel 12 und am Gegenlager 14 anliegenden elektrischen Potentiale an elektrisch leitende Materiallagen A, B und das Schweißhilfsfügeteil weitergeleitet, sodass ein elektrischer Stromfluss stattfinden kann. Dieser elektrische Stromfluss wird vorzugsweise einerseits zum Erwärmen der von Strom durchflossenen Bereiche verwendet und andererseits zum Verschweißen des Schweißhilfsfügeteils mit der zweiten Materiallage B (siehe unten).

Die oben genannten elektrischen Lasten werden mithilfe der Steuer-Regel-Einrichtung 20 angesteuert. Dazu steuert die Steuer-Regel-Einrichtung 20 über eine Schweißeinrichtung 50 bevorzugt einen Schweißtransformator 60 an, wie unten näher beschrieben ist.

Die dem Stempel 12 und dem Gegenlager 14 zugeführten einstellbaren elektrischen Ströme dienen einerseits der Durchführung des Schweißvorgangs. Im Speziellen wird bevorzugt ein bolzenähnliches Schweißhilfsfügeteil an der Materiallage B aus schweißbarem Material oder an Abschnitten aus schweißbarem Material innerhalb der zweiten Materiallage B flächig verschweißt. Dieses Verschweißen, dem kein Setzen des Schweißhilfsfügeteils in diese zweite Materiallage B vorausgeht, erfolgt an der Oberfläche der zweiten Materiallage B bevorzugt über ein elektrisches Widerstandsschweißen. Zudem dienen die zugeführten elektrischen Ströme einem Erwärmen des Schweißhilfsfügeteils und benachbarter Bereiche der miteinander zu verbindenden Materiallagen A, B. Somit dient die Schweißeinrichtung 50 gemäß einer bevorzugten Ausführungsform vorliegender Erfindung auch als Erwärmungseinrichtung 70, um gezielt erwärmende elektrische Ströme zumindest im Schweißhilfsfügeteil zu erzeugen. Es ist ebenfalls bevorzugt, diese erwärmenden elektrischen Ströme mit einer Erwärmungseinrichtung zu erzeugen.

Um die elektrischen und mechanischen Lasten am Stempel 12 und am Gegenlager 14 erfassen zu können, sind Messeinrichtungen 34 vorgesehen. Die Messeinrichtungen 34 erfassen bevorzugt elektrische und mechanische Prozessdaten, wie den elektrischen Strom, die elektrische Spannung, die elektrische Leistung, den elektrischen Widerstand, die Kraft und den Stempelweg. Mithilfe von entsprechenden Referenzsignalen werden die erfassten mechanischen und elektrischen Prozessdaten an die Erfassungseinrichtung 30 übermittelt. Die Erfassungseinrichtung 30 übermittelt die empfangenen Prozessdaten vorzugsweise an eine Auswerteeinrichtung 40. Dort werden die erfassten mechanischen und elektrischen Prozessdaten des Setz-Schweiß-Geräts 10 mit gespeicherten Referenzkurven und/oder Kennwerttabellen von Betriebsparametern des Setz-Schweiß-Geräts verglichen. Im Falle von Abweichungen zwischen hinterlegten Referenzkurven und/oder Kennwerttabellen und den ermittelten Prozessdaten des Setz-Schweiß-Geräts 10 sind Korrekturwerte für den jeweiligen Betriebsparameter des Setz-Schweiß-Geräts 10 ermittelbar. Diese Korrekturwerte werden dann von der Auswerteeinrichtung 40 an die Steuer-Regel-Einrichtung 20 weitergeleitet, um sie bei der Ansteuerung des Setz-Schweiß-Geräts 10 zu berücksichtigen. Im Hinblick auf die Regelung der Stempelkraft ermittelt bspw. ein Kraftsensor 32 die Stempelkraft, die auf das Schweißhilfsfügeteil wirkt. Nach Weiterleitung der Stempelkraft zur Erfassungseinrichtung 30 wird sie in der Auswerteeinrichtung 40 mit der angesteuerten Stempelkraft verglichen. Falls erforderlich, liefert der auswertende Vergleich einen Korrekturwert der Stempelkraft, der über die Steuer-Regel-Einrichtung 20 angesteuert wird. Ein Anwendungsbeispiel für eine derartige Regelung ist die adaptive Kraftregelung, wie sie unten näher erläutert ist.

Zur Steuerung des Setz-Schweiß-Geräts 10 sind in der Steuer-Regel-Einrichtung 20 anpassbare Steuerkurven hinterlegt, die die mechanischen und elektrischen Betriebsparameter des Setz-Schweiß-Geräts 10 vorgeben. Während des Betriebs des Setz-Schweiß-Geräts 10 werden die Steuerkurven, bspw. für die Setzkraft des Stempels 12 oder für den über den Stempel 12 und das Gegenlager 14 fließenden elektrischen Strom, in der Auswerteeinrichtung 40 mit den erfassten mechanischen und elektrischen Prozessdaten verglichen. Die mechanischen und elektrischen Steuerkurven sind in der Auswerteeinrichtung 40 in Form der Referenzkurven und/oder Kennwerttabellen hinterlegt oder werden anhand der ermittelten Messwerte für eine adaptive Regelung jeweils vorausberechnet.

Die Steuer-Regel-Einrichtung 20 steuert sowohl die mechanischen wie auch die elektrischen Lasten an, die über den Stempel 12 und das Gegenlager 14 auf das Schweißhilfsfügeteil und die zwischen ihnen angeordneten Materiallagen A, B aufgebracht werden. Daher betätigt die Steuer-Regel-Einrichtung 20 den Antrieb 16 sowie die Zuführeinrichtung 18 des Setz-Schweiß-Geräts 10. Des Weiteren betätigt die Steuer-Regel--Einrichtung 20 die programmierbare Schweißeinrichtung 50, in der eine dem Betrieb des Setz-Schweiß-Geräts 10 angepasste Schweißsteuerung hinterlegbar ist. Im Speziellen regelt die Schweißeinrichtung 50 die Bereitstellung eines primären Schweißstroms für den Schweißtransformator 60 über die Primärstromleitung 52. Der Schweißtransformator 60 ist über die Leitungen 62, 64 mit dem als Elektroden ausgebildeten Stempel 12 und Gegenlager 14 verbunden. Ausgehend von der Schweißeinrichtung 50 wird der Primärstrom über die Primärstromleitung 52 an den Schweißtransformator 60 geliefert. Der Schweißtransformator 60 wandelt den Strom in einen geeigneten sekundären Schweißstrom um, sodass entsprechend der Materialkombination von Schweißhilfsfügeteil und zweiter Materiallage B ein Widerstandsschweißen stattfinden kann.

Zur Bereitstellung der in der Steuer-Regel-Einrichtung 20 hinterlegten Steuerkurven für die mechanischen und elektrischen Betriebsparameter des Setz-Schweiß-Geräts 10 werden Versuchsserien an den später miteinander zu verbindenden Materialien durchgeführt. Über diese Versuchsserien findet ein Lernen der Steuer-Regel-Einrichtung 20 statt, in dem die später anzuwendenden Betriebsparameter des Setz-Schweiß-Geräts 10 hinterlegt werden. Zu diesen Betriebsparametern zählt die durch den Stempel 12 zu realisierende Klemm- und Setzkraft, das über den Stempel 12 und das Gegenlager 14 zu erzeugende elektrische Stromprofil innerhalb des Schweißhilfsfügeteils und den damit zu verbindenden Materiallagen A, B über die gesamte Zeit des Füge- und Schweißvorgangs (siehe Fig. 2 und 3). Des Weiteren werden im Rahmen derartiger vorbereitender Versuchsreihen die für das dauerhafte und effiziente Verschweißen von Schweißhilfsfügeteil und zweiter Materiallage B erforderlichen Schweißströme und Schweißzeiten sowie vorgeschaltete Aufwärmströme und zwischengeschaltete Stromreduktionsphasen zum Abkühlen getestet und durch die Einstellung der vorteilhaften bzw. optimierten Betriebsparameter definiert.

Wie oben bereits dargelegt worden ist, ist die Schweißeinrichtung 50 auf die zu realisierenden Betriebsparameter des Setz-Schweiß-Geräts 10 programmierbar. Für die Realisierung eines effizienten flächigen Verschweißens des Schweißhilfsfügeteils mit der zweiten Materiallage B ist es erforderlich, dass ein ausreichend großes Primärstrompotenzial vorliegt, um den notwendigen Sekundärstrom auf der Basis des Transformator-Wicklungsverhältnisses zu erzielen. Da hier bekannte Materialien, wie bspw. ein Schweißhilfsfügeteil aus Stahl mit einer zweiten Materiallage B aus Stahl, miteinander verschweißt werden sollen, kann auf bekannte Schweißgeräte und Schweißtransformatoren zum Widerstandsschweißen zurückgegriffen werden.

Während des Setzens bzw. Eintreibens des Schweißhilfsfügeteils in die mindestens eine erste Materiallage A findet unter den kombinierten mechanisch-thermischen Belastungen ein Umformen des Schweißhilfsfügeteils für den nachfolgenden Schweißvorgang statt. Zur Realisierung dieses Umformens muss der elektrische Strom und die damit erzeugte Wärme auf ein Niveau unterhalb des Werts eingestellt werden, bei dem ein Schmelzen des Schweißhilfsfügeteils und des Materials der mindestens einen ersten Materiallage A stattfindet. Dieser Stromwert muss jedoch ausreichend hoch sein, um ein Aufweichen des Materials des Schweißhilfsfügeteils und des Materials der mindestens einen ersten Materiallage A zu realisieren. Beim Aufweichen von Material wird seine Duktilität durch Temperaturerhöhung bzw. Wärmezufuhr vergrößert. Dadurch ist eine plastische Verformung unter geringerer Krafteinwirkung als ohne Erwärmung möglich.

Basierend auf diesem kontrollierten Aufweichen wird während des Eintreibens des Schweißhilfsfügeteils in die mindestens eine erste Materiallage A gleichzeitig ein Umformen des Schweißhilfsfügeteils zur Vorbereitung des nachfolgenden Schweißvorgangs realisiert. Dieses Umformen findet im Wesentlichen im Schaftbereich und im Spitzenbereich des Schweißhilfsfügeteils statt. Dabei wird der Spitzenbereich bzw. die Spitze des Schweißhilfsfügeteils abgestumpft und der Schaftbereich in radialer Richtung aufgeweitet (siehe Fig. 2 Bild b) und c)). Als Ergebnis dieses Umformens resultiert ein Schweißhilfsfügeteil mit einer ausreichend großen Kontaktfläche zwischen Schweißhilfsfügeteil und der zweiten Materiallage B. Die Erzeugung einer ausreichend großen Kontaktfläche zwischen Schweißhilfsfügeteil und zweiter Materiallage B wird vorzugsweise auch dadurch unterstützt, dass das aufgeweichte Schweißhilfsfügeteil am Ende des Eintreibvorgangs an der zweiten Materiallage B gestaucht wird (siehe Fig. 2 Bild d)). Entsprechend dem Material des Schweißhilfsfügeteils und der miteinander zu verbindenden Materiallagen A, B sowie in Abhängigkeit von der Dimensionierung des Schweißhilfsfügeteils und der Dicken der miteinander zu verbindenden Materiallagen A, B sind die Stempelkräfte und die angesteuerten elektrischen Ströme zum Erwärmen und Aufweichen des Materials einzustellen.

Gemäß einer weiteren bevorzugten Ausführungsform vorliegender Erfindung sind die Zuführeinrichtung 18, die Schweiß- und/oder Erwärmungseinrichtung 50/70 und deren Steuer-Regel-Einrichtung 20 modular vorgesehen. Das bedeutet, dass sie von dem Setz-Schweiß-Gerät 10 in ihrer Einheit entfernbar und mit diesem kombinierbar sind. Dies eröffnet zudem die Möglichkeit, dass die genannten modularen Einrichtungen mit anderen Schweißzangen oder bekannten Setzgeräten kombiniert werden können.

In diesem Zusammenhang ist es ebenfalls bevorzugt, eine separate modulare Steuer-Regel-Einrichtung 20 bereitzustellen. Diese modulare Steuer-Regel-Einrichtung 20 ist mit einem Setzgerät oder einer Schweißzange nach an sich bekannter Bauart kombinierbar. Auf diese Weise wird dem Setzgerät die Funktionalität des erfindungsgemäßen Setz-Schweiß-Geräts gegeben. Dazu umfasst das modulare Steuer-Regel-Einrichtung 20 die bereits oben diskutierte Erfassungseinrichtung 30 für mechanische und/oder elektrische Prozessdaten, die oben diskutierte Schweißeinrichtung 50, mit der die Schweißverbindung über den Elektrodenstempel 12 und das Elektrodengegenlager 14 des Setzgeräts oder der Schweißzange herstellbar ist, oder eine Erwärmungseinrichtung 70. Sollte das Setzgerät oder die Schweißzange, die mit der modularen Steuer-Regel-Einrichtung 20 kombiniert werden soll, noch keinen Elektrodenstempel 12 und kein Elektrodengegenlager 14 aufweisen, ist es natürlich erforderlich, an diesem Setzgerät oder dieser Schweißzange einen entsprechenden elektrisch leitenden Stempel 12 als Elektrodenstempel und ein elektrisch leitendes Gegenlager 14 als Elektrodengegenlager zu realisieren. Des Weiteren umfasst die modulare Steuer-Regel-Einrichtung 20 die ebenfalls oben diskutierte Zuführeinrichtung 18 für Schweißhilfsfügeteile in Kombination mit einem Niederhalter. Dieser Niederhalter hat die gleichen Eigenschaften wie der bereits oben beschriebene Niederhalter.

Es ist ebenfalls möglich, die oben beschriebenen oder einen Teil der oben beschriebenen Einrichtungen in einer modularen Zuführeinrichtung für Schweißhilfsfügeteile zu kombinieren, die mit einem Setzgerät oder einer Schweißzange bekannter Bauart kombinierbar ist. Diese modulare Zuführeinrichtung umfasst die oben beschriebene Schweißeinrichtung 50, mit der die Schweißverbindung über den diskutierten Elektrodenstempel 12 und das Elektrodengegenlager 14 des Setzgeräts oder der Schweißzange herstellbar ist, oder/und die Erwärmungseinrichtung 70, mit der das Schweißhilfsfügeteil und/oder mindestens ein Teilbereich von angrenzende Materiallagen erwärmbar sind. Zudem umfasst die modulare Zuführeinrichtung den bereits oben diskutieren federnden oder angetriebenen Niederhalter. Gemäß einer weiteren beispielhaften Ausführungsform weist die modulare Zuführeinrichtung ebenfalls die oben diskutierte Erfassungseinrichtung 30 für die mechanischen und elektrischen Prozessdaten sowie eine Datenschnittstelle zu einem elektronischen Steuerungssystem des Setzgeräts oder der Schweißzange auf.

Mithilfe der oben beschriebenen modularen Steuer-Regel-Einrichtung 20 werden erfindungsgemäß Nachrüstsätze für bekannte Setzgeräte bereitgestellt, die eine Umrüstung bekannter Setzgeräte auf das erfindungsgemäße Setz-Schweiß-Gerät ermöglichen. Die modulare Steuer-Regel-Einrichtung 20 und/oder die modulare Zuführeinrichtung 18 können als Zubehörsatz vorgesehen werden, so dass sie ähnlich einem Baukastensystem mit bekannten Setzgeräten und Schweißgeräten kombinierbar sind.

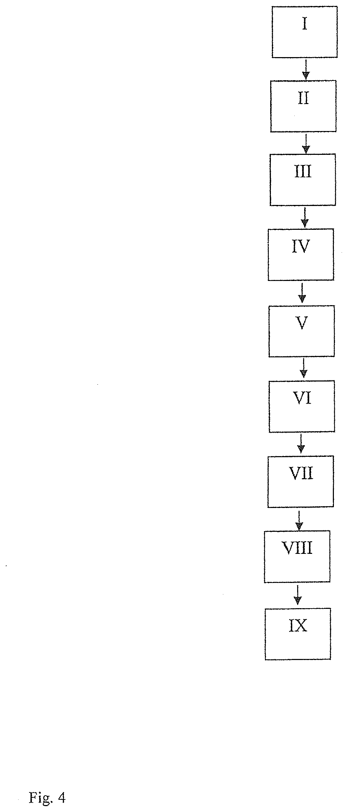

Bezugnehmend auf die Figuren 2, 3 und 4 wird im Folgenden das kontinuierliche Verbindungsverfahren auf Grundlage eines mechanisch-thermischen Setz-Schweiß-Prozesses beschrieben. Erfindungsgemäß bevorzugt wird dieses Verfahren mit dem oben beschriebenen und in Fig. 1 schematisch dargestellten Setz-Schweiß-Gerät 10 durchgeführt. Gemäß weiter bevorzugter Ausführungsformen vorliegender Erfindung wird ein bekanntes Setzgerät mit der modularen Steuer-Regel-Einrichtung 20, der modularen Zuführeinrichtung und einer Schweißeinrichtung kombiniert, um ein geeignetes Setz-Schweiß-Gerät zur Durchführung des Verfahrens zu erhalten (siehe oben). Basierend auf dem bereits oben angesprochenen Baukasten-Prinzip mithilfe der modularen Steuer-Regel-Einrichtung 20 und der modularen Zuführeinrichtung bestehen nun unterschiedliche alternative Kombinationsmöglichkeiten, sodass mit dem daraus hervorgehenden Gerät das kontinuierliche Verbindungsverfahren oder ein unterbrochenes Verbindungsverfahren durchführbar ist. So ist vorzugsweise eine bekannte Schweißzange mit der modularen Zuführeinrichtung 10 mit Niederhalter-Funktion oder mit separatem Niederhalter kombinierbar. Zudem werden an dieser Schweißzange Einrichtungen zur Bestimmung der Kraft sowie die Auswerteeinrichtung vorgesehen, um die mechanisch-thermischen Setzvorgänge zu regeln. Des Weiteren ist es bevorzugt, die Schweißzange zusätzlich mit einem Messgerät zur Messung der Wärme im Schweißhilfsfügeteil und/oder in benachbarten Materiallagen zu erfassen. Aufbauend darauf werden Regeleinrichtungen vorgesehen, die eine gezielte Einstellung der der Fügestelle zugeführten Wärme ermöglichen. Mithilfe der bereits oben genannten Auswerteeinrichtung werden die von den Messeinrichtungen erfassten Daten ausgewertet und an eine Steuereinrichtung der Schweißzange übertragen. Mithilfe der übertragenen Daten ist die Steuereinrichtung der Schweißzange in der Lage, dass kontinuierliche oder unterbrochene Verbindungsverfahren gemäß vorliegender Erfindung zu realisieren.

Gemäß einer weiteren bevorzugten Ausführungsform werden an einem bekannten Setzgerät der vorhandene Stempel und das Gegenlager in einen Elektrodenstempel und ein Elektrodengegenlager umgewandelt. Dies erfolgt gemäß einer alternativen Ausführungsform, in dem Schweißelektroden-Kappen auf den Stempel und das Gegenlager aufgesetzt werden. Über diese Schweißelektroden-Kappen erfolgt dann auch die Stromzufuhr zum Stempel des Setzgeräts. Mithilfe von erfindungsgemäß bevorzugten Strom- und Spannungsmesseinrichtungen können sowohl der aufwärmende elektrische Strom vor dem Verschweißen und während des Umformschritts sowie der spätere Schweißstrom während des Verschweißens von Schweißhilfsfügeteil und zweiter Materiallage erfasst und ausgewertet werden. Die Auswertung erfolgt in der bereits oben diskutierten Auswerteeinrichtung, die mit der Steuerung des Setzgeräts verbunden ist. Basierend auf den von der Auswerteeinrichtung empfangenen Daten ist die Steuerung des Setzgeräts in der Lage, gezielt mechanische Lasten sowie zusätzliche elektrische Lasten im Schweißhilfsfügeteil und an der Fügestelle anzusteuern. Die Ansteuerungsmöglichkeit der elektrischen Lasten wird gemäß einer bevorzugten Ausführungsform in die Steuerung des bekannten Setzgeräts durch eine zusätzliche Steuersoftware aufgenommen.

Des Weiteren ist es erfindungsgemäß bevorzugt, die oben beschriebenen Kombinationsmöglichkeiten bzw. die oben beschriebenen Baukasten-Systeme mit einer zusätzlichen Temperaturmesseinrichtung für elementnahe Temperaturmessungen zu versehen. Diese Temperaturmessung bestimmt die Temperatur des Schweißhilfsfügeteils und/oder der mindestens einen ersten Materiallage A. Sobald die Temperatur von der Temperaturmesseinrichtung erfasst worden ist, wird sie mithilfe geeigneter Datenübertragungsmittel an die Steuerung und eine daran angeschlossene Erwärmungseinrichtung weitergeleitet. Da die Steuerung des Setzgeräts und/oder die Erwärmungseinrichtung ein Steuer- oder Regelprogramm für die Erwärmung an der Fügestelle umfasst, werden entsprechend über die Steuerung und/oder die Erwärmungseinrichtung die für die Erwärmung erforderlichen Ströme angesteuert. In diesem Zusammenhang ist es ebenfalls bevorzugt, die Wärmezufuhr am Schweißhilfsfügeteil und/oder der ersten Materiallage A mithilfe der an der Fügestelle erfassten Kraft des Stempels zu überwachen. Sollte sich im Verlauf der Kraft in Abhängigkeit vom Stempelweg oder der Zeit ein plötzlicher Kraftabfall zeigen, deutet dies auf eine Überhitzung oder energetische Überlastung des Materials an der Fügestelle hin. Dies schließt sowohl eine Überhitzung des Schweißhilfsfügeteils wie auch eine Überhitzung der benachbarten Bereiche der ersten Materiallage A ein.

Im Rahmen des kontinuierlichen oder unterbrochen durchzuführenden Verbindungsverfahrens werden zunächst (Schritt I) die mindestens eine erste Materiallage A und die mindestens eine zweite Materiallage B aus schweißbarem Material oder mit Bereichen aus schweißbarem Material in einem Stapel zwischen dem Stempel 12 und dem Gegenlager 14 angeordnet. Nach Zufuhr eines Schweißhilfsfügeteils in Fügerichtung unterhalb des Stempels 12 bewegt der Antrieb 16 den Stempel 12 und somit das Schweißhilfsfügeteil in Fügerichtung S. Dadurch setzt das Schweißhilfsfügeteil auf dem Stapel aus Materiallagen A, B auf. Zudem werden die Materiallagen A, B gegeneinander gedrückt, sodass Zwischenräume zwischen den Materiallagen A, B geschlossen werden. In dieser Phase ist die durch den Stempel 12 aufgebrachte Kraft F gering und kaum reproduzierbar, weil mit Luft oder Klebstoff gefüllte Zwischenräume zwischen den Materiallagen A, B geschlossen werden und der Stapel entsprechend nachgibt. Daher ist diese Phase in der Kraft-Weg-Kennlinie des Stempels 12 gemäß Fig. 2 oder 3 nicht eingezeichnet. Schematisch veranschaulicht ist diese Phase im Bild a) aus Fig. 2.

Gemäß einer bevorzugten Ausführungsform vorliegender Erfindung wird das Paket aus Materiallagen A, B nicht mit dem Stempel 12 sondern mit einem Niederhalter NH auf Block zusammengedrückt und gehalten. Der Niederhalter erfüllt hier die gleiche Funktion wie zuvor der Stempel 12 in Kombination mit dem Schweißhilfsfügeteil. Dabei wird weder über den Stempel 12 noch über den Niederhalter eine elektrische Last und somit eine thermische Belastung im Schweißhilfsfügeteil erzeugt (siehe Fig. 3).

Das Diagramm in Fig. 2 zeigt eine Kraft-Weg/Zeit-Kennlinie (durchgezogene Linie) und eine Strom-Weg/Zeit-Kennlinie (gestrichelte Linie). Auf der X-Achse sind qualitativ die Zeit oder der Weg des Stempels 12 aufgetragen.

Im Schritt II wird der Stempel 12 über den Antrieb 16 in Fügerichtung S bewegt und damit die auf den Stempel 12 wirkende Kraft F erhöht. Dies ist an der stetig ansteigenden Kraft-Kennlinie der Fig. 2 erkennbar. Alternativ dazu ist das Steuerungssystem des kombinierten Setz-Schweiß-Geräts 10 ebenfalls in der Lage, den Beginn von Schritt II anhand eines deutlichen Kraftanstiegs in der Kraft-Kennlinie zu erfassen, während zuvor in Schritt I nur ein indifferenter Kraftverlauf erkennbar war. Entsprechend der Stärke der mindestens einen ersten Materiallage A, in die das Schweißhilfsfügeteil eingetrieben bzw. gesetzt werden soll, wird durch die Steuer-Regel-Einrichtung 20 bevorzugt eine Kraft F_{A} sowie eine Zeitspanne t_{A} vorgegeben, in der die Anfangskraft F_{A} am Schweißhilfsfügeteil anliegen soll. Die Anfangskraft liegt vorzugsweise bei F_{A} > 5 kN, weiter bevorzugt bei > 8kN. Die Anfangskraft F_{A} und die Zeitspanne t_{A} sind derart gewählt, dass Setzvorgänge im zusammengedrückten Paket der Materiallagen A, B stattfinden können. Zudem könnte Klebstoff verdrängt oder zwischen den Materiallagen A, B verteilt werden. Es kommt somit nicht zu einem indifferenten Kraftverlauf, sondern zu einem relativ steilen Kraftanstieg, wie die Kraft-Kennlinie in den Fig. 2 und 3 veranschaulicht.

Zudem ist die Anfangskraft F_{A} ausreichend hoch, sodass ein erstes Eindringen des Schweißhilfsfügeteils in die Materiallage A stattfindet. Die Messung der Stempelkraft mit dem Kraftsensor 32 wird bevorzugt direkt am Stempel 12 oder indirekt am Gegenlager 14 durchgeführt. Danach erfolgen die Erfassung der Kraft in der Erfassungseinrichtung 30 und die Auswertung in der Auswerteeinrichtung 40.

Ein Schritt III bezeichnet die Setzphase des Schweißhilfsfügeteils, in der das Schweißhilfsfügeteil in die mindestens eine Materiallage A eingetrieben bzw. gesetzt wird. Es findet bevorzugt ein fließender Übergang zwischen den Schritten II und III statt, ohne dass das kontinuierliche Verbindungsverfahren unterbrochen wird. Während der Setzphase ist zunächst die Stempelkraft immer noch auf ihrem Maximalwert gemäß der Kraft-Kennlinie in Fig. 2. Es ist ebenfalls bevorzugt, dass die Stempelkraft stetig ansteigt, solange gleichzeitig ein Eintreiben des Schweißhilfsfügeteils in die Materiallage A stattfindet. Gemäß einer weiteren bevorzugten Verfahrensalternative steigt die Setzkraft bis auf einen Maximalwert F_{A} an und fällt danach wieder stetig ab. Die Kraft-Kennlinie ist in Abhängigkeit von dem Material der Materiallage A sowie der Form des bolzenähnlichen Schweißhilfsfügeteils einstellbar, um ein optimales Eintreiben des Schweißhilfsfügeteils zu realisieren.

Um den Setzvorgang zu unterstützen, wird gesteuert durch die Erwärmungseinrichtung 70 oder die Schweißeinrichtung 50 ein elektrischer Strom I über den Stempel 12 und das Gegenlager 14 im Schweißhilfsfügeteil und in den elektrisch leitenden Materiallagen A, B erzeugt (vgl. Bild b) in Fig. 2 und 3). Der elektrische Strom I ist basierend auf der Materialwahl der Materiallage A und des Schweißhilfsfügeteils sowie aufbauend auf den entsprechenden Vorversuchen (siehe oben) ausreichend groß, sodass die dadurch erzeugte Wärme im Schweißhilfsfügeteil und in der Materiallage A ein Aufweichen des Materials, vorzugsweise im Spitzenbereich und/oder im Schaftbereich des Schweißhilfsfügeteils, erzeugt. Durch diese Wärmezufuhr im Schweißhilfsfügeteil und somit in der Fügezone wird aber das Material des Schweißhilfsfügeteils und der angrenzenden Materiallagen A, B nicht soweit erhitzt, dass es zu einer Materialschädigung, Gefügeumwandlung oder einem das Setzen behindernden Aufschmelzen des Materials in der Fügezone kommt.

Die im Schweißhilfsfügeteil erzeugte Wärme strahlt ebenfalls auf die angrenzenden Bereiche der Materiallagen A, B ab. Gemäß einer weiteren Verfahrensalternative wird durch einen elektrischen Stromfluss in der Materiallage A auch dort Wärme erzeugt. Gemäß einer anderen zusätzlichen oder alternativen Verfahrensführung wird durch eine zusätzliche indirekte Erwärmung durch eine separate optionale Wärmequelle das Schweißhilfsfügeteil und ein Teilbereich der Materiallage A erwärmt. Auf diese Weise findet während der Setzphase des Schweißhilfsfügeteils ebenfalls ein Aufweichen der Materiallage A im Fügebereich statt. Diese thermische Belastung erleichtert das Setzen des Schweißhilfsfügeteils in der Materiallage A, sodass dadurch vorteilhafte vorzugsweise die Stempelkraft F verringert, insbesondere stetig, verringert wird.

Da sich die Kraft F_{III} des Stempels 12 und die durch den Strom I_{III} erzeugte Wärme während des Setzvorgangs ergänzen, wird vorzugsweise F_{III} bei konstanter Stromstärke I_{III} verringert (Alternative 1). Alternativ bevorzugt werden die Stempelkraft F_{III} und die Stromstärke I_{III} auf einen quasi konstanten Wert abgesenkt, sodass sie gemeinsam die optimal ergänzende Setzbelastung für das Schweißhilfsfügeteil bilden (Alternative 3). Gemäß einer weiteren bevorzugten Verfahrensalternative wird nur ein relativ geringer elektrischer Strom im Schweißhilfsfügeteil erzeugt, sodass mit nahezu konstanter Stempelkraft F das Schweißhilfsfügeteil weiter eingetrieben wird (nicht gezeigt).

Es ist des Weiteren bevorzugt, die Stempelkraft F als Funktion des Stroms I einzustellen. Auf diese Weise wird ebenfalls ein optimaler Energieeintrag in das Schweißhilfsfügeteil zum Setzen in die mindestens eine Materiallage A einstellbar, ohne dass das Material des Schweißhilfsfügeteils und/oder das Material der Materiallage A nachteilig beeinflusst werden (Alternative 2) (siehe Phase III in Fig. 2 und 3).

Sobald das Material des Schweißhilfsfügeteils und vorzugsweise das Material der Materiallage A durch die zugeführte Wärme ausreichend aufgeweicht sind, findet während des Setzvorgangs eine plastische Umformungsphase des Schweißhilfsfügeteils statt (Schritt IV). Ist die zugeführte Wärme oder die durch den elektrischen Strom erzeugte Wärmemenge ausreichend groß, um auch das Material der Materiallage A ebenfalls nur aufzuweichen, findet die Umformungsphase gleichzeitig am Schweißhilfsfügeteil und in der mindestens einen Materiallage A statt. Dies ist entsprechend der Fall, wenn die Materiallage A aus elektrisch nicht leitendem oder aus elektrisch leitendem Material besteht. Aus der oben beschriebenen gleichzeitigen plastischen Umformung der mindestens einen Materiallage A und das sich ebenfalls verformende Schweißhilsfügeteil herum ergibt sich eine komplementäre Form des Schweißhilfsfügeteils und der umgebenden Materiallage A zumindest im Schaftbereich.

Bereits während des Setzvorgangs des Schweißhilfsfügeteils in der Materiallage A kommt es aufgrund des aufgeweichten Materials zu einer Abstumpfung des Spitzenbereichs des bolzenähnlichen Schweißhilfsfügeteils. Die Umformungsphase setzt sich fort, auch wenn der Setzvorgang des Schweißhilfsfügeteils in der Materiallage A nahezu beendet ist (vgl. Bild c) in Fig. 2). Während der Stempel 12 weiterhin Kraft auf das Schweißhilfsfügeteil aufbringt, trifft das aufgeweichte Schweißhilfsfügeteil auf die zweite Materiallage B und wird dort nahezu ohne Einzudringen aber mit entsprechend intensivem Kontakt gestaucht. Das Stauchen des Spitzenbereichs und vorzugsweise des Schafts des Schweißhilfsfügeteils führt zu einer Vergrößerung einer Kontaktfläche zwischen dem Schweißhilfsfügeteil und der Materiallage B. Die Kontaktflächenvergrößerung dient als Vorbereitung für das spätere Verschweißen des Schweißhilfsfügeteils mit der Materiallage B aus schweißbarem Material oder mit einem Bereich aus schweißbarem Material. Gleichzeitig kann während des Stauchens das aufgeweichte Material des Schweißhilfsfügeteils vorzugsweise im Schaftbereich des Schweißhilfsfügeteils radial ausweichen, sodass das Schweißhilfsfügeteil weiter radial in die Materiallage A eingetrieben werden kann. Auf diese Weise bildet sich im Fügebereich zwischen Schweißhilfsfügeteil und der mindestens einen Materiallage A ein verlässlicher Form- und vorzugsweise Kraftschluss und/oder ein die Verbindung unterstützender Hinterschnitt des Schweißhilfsfügeteils aus. Dieser Vorgang ist vorzugsweise beendet, sobald der Kopf des Schweißhilfsfügeteils auf der Materiallage A aufliegt.

In diesem Zusammenhang ist es ebenfalls denkbar, das Schweißhilfsfügeteil nicht soweit in die mindestens eine Materiallage A einzutreiben, bis der Kopf des Schweißhilfsfügeteils auf dieser aufliegt. Sollte bspw. der Kopf des Schweißhilfsfügeteils eine bestimmte Befestigungsfunktion erfüllen, kann es vorteilhaft sein, dass der Kopf einen gewissen Abstand zur Oberseite der mindestens einen Materiallage A aufweist. Eine weitere Möglichkeit besteht darin, dass das bolzenähnliche Schweißhilfsfügeteil keinen sich radial über den Schaftdurchmesser hinaus erstreckenden Kopf aufweist, sodass dieser nicht zur Auflage auf der Materiallage A kommen kann, sondern bündig eingetrieben wird. Des Weiteren dient ein Kopfüberstand dazu, dass man für das nachfolgende Schweißverfahren zusätzliches Material zur Verfügung stellt. Durch weiteres Setzen des Schweißhilfsfügeteils während des Verschweißens wird dieses Materialvolumen zum Ausfüllen von Spalten der Schweißlinse zugeführt und in mögliche Hohlräume verdrängt. Dies unterstützt optional die Verbindung mit zusätzlichem Stoffschluss aufgrund des verdrängten Materials.

Um die Fügezone mit dem Schweißhilsfügeteil und der mindestens einen Materiallage A nicht zu überhitzen, ist es bevorzugt, während des Stauchens bzw. Umformens des Schweißhilfsfügeteils den Strom und somit die Wärmezufuhr zur Fügezone bereits abzuschalten. Die im Material gespeicherte Wärme ist gemäß einer Ausführungsform ausreichend, um den Setzvorgang des Schweißhilfsfügeteils abzuschließen. Durch Abschalten des elektrischen Stroms oder der Wärmezufuhr können optional die Materialien des Schweißhilfsfügeteils und der benachbarten Materiallage A soweit abkühlen, dass beim nachfolgenden Verschweißen keine Überhitzung stattfindet. Dadurch werden bspw. Schweißspritzer weitgehend vermieden.

In einem optionalen Schritt V wird ein Strompeak Ip erzeugt, um ein kurzzeitiges Hitzemoment an der Kontaktfläche zwischen Schweißhilfsfügeteil und der zweiten Materiallage B zu erzeugen. Mithilfe des Hitzemoments werden eventuelle Verunreinigungen an der Kontaktfläche zwischen Schweißhilfsfügeteil und Materiallage B beseitigt, vorzugsweise weggebrannt.

Die miteinander zu verbindenden Materiallagen A, B und das Schweißhilfsfügeteil werden aufgrund des vorhergehenden Setzvorgangs mit einer bestimmten Klemmkraft durch Stempel 12 und/oder Niederhalter NH gehalten. In dem kontinuierlichen Verbindungsverfahren findet in den folgenden Schritten VI-IX das Verschweißen des Schweißhilfsfügeteils mit der Materiallage B auf Grundlage an sich bekannter Punktschweißverfahren statt. Gemäß einer bevorzugten Ausführungsform vorliegender Erfindung regelt die Schweißeinrichtung 50 dazu einen Strom am Stempel 12 und Gegenlager 14 ein, der einen elektrischen Widerstand an den Grenzflächen zwischen Stempel 12 und Schweißhilfsfügeteil, Schweißhilfsfügeteil und Materiallage B sowie zwischen Materiallage B und Gegenlager 14 auf einen konstanten und niedrigen Wert reduziert und stabilisiert. Dadurch wird bevorzugt die Reproduzierbarkeit der Vielzahl der einzelnen Schweißpunkte in der Serie verbessert. Der elektrische Strom steigt dabei von ca. 2 kA auf bis zu 5-10 kA an. Dabei wird eine Stromstärke eingeregelt, die kurz unter dem Stromwert liegt, bei dem ein Schmelzen des Materials des Schweißhilfsfügeteils und der Materiallage B gerade an der Kontaktfläche zwischen Schweißhilfsfügeteil und Materiallage B stattfindet. Der Strom wird typischerweise für eine Zeitspanne von 10-100 ms aufrecht erhalten. Dies gewährleistet, dass sich der niedrige Wert des Widerstands einstellt. Die angesteuerte hohe Stromstärke führt zu einer einstellbaren und somit vorzugsweise kontrollier- und/oder regelbaren Erhitzung der stromdurchflossenen Bereiche, sodass vorzugsweise der Kontakt zwischen Stempel 12 und Schweißhilfsfügeteil sowie zwischen dem Gegenlager 14 und der angrenzenden Materiallage B weiter verbessert und stabilisiert wird. Um die Wärmebelastung der stromdurchflossenen Bereiche für einen optimalen folgenden Schweißvorgang gegebenenfalls zu reduzieren, wird gemäß einer weiteren bevorzugten Verfahrensalternative und optional kurzzeitig der Strom abgeschaltet oder abgesenkt. Dies beeinträchtigt jedoch nicht den erzielten niedrigen Widerstandswert (siehe oben).

Im nachfolgenden Schritt VII steuert die Schweißeinrichtung 50 über den Schweißtransformator 60 in einer zeitlich kurzen Stromaufbauphase eine im Vergleich zu den bisher angesteuerten Strömen hohe Stromstärke von ca. 15-50 kA, vorzugsweise 20-40 kA an. Diese Stromstärke wird insbesondere in einem Intervall von 5-20 ms erreicht.

Durch den Stromsprung im Schritt VII auf eine Stromstärke, die deutlich über dem Wert liegt, an dem ein Schmelzen des Materials an der Kontaktfläche zwischen Schweißhilfsfügeteil und Materiallage B stattfindet, wird die Ausbildung einer Schweißlinse SL gestartet. Der Stromsprung ist mit einem initialen Schweißimpuls vergleichbar, wodurch eine Gefügeverschmelzung und -umwandlung im Kontaktflächenbereich zwischen Schweißhilfsfügeteil und Materiallage B angestoßen wird. Die Ausbildung der Schweißlinse SL findet zunächst an der Oberfläche oder vorzugsweise im oberen Drittel bezogen auf eine Dicke der Materiallage B gesehen in Fügerichtung statt, da das Schweißhilfsfügeteil nahezu nicht in die Materiallage B gesetzt worden ist. Die Schweißlinse SL ist daher bevorzugt flächig ausgebildet und erstreckt sich in radialer Ausdehnung um den gestauchten Spitzenbereich des Schafts des Schweißhilfsfügeteils. Aufgrund der vernachlässigbar geringen Eindringtiefe des Schweißhilfsfügeteils in die Materiallage B ergibt sich keine Schweißlinse SL mit im Vergleich zu ihrer radialen Ausdehnung überwiegender axialer Erstreckung bezogen auf den Schaft des Schweißhilfsfügeteils.

Der die Schweißlinse SL erzeugende Schweißstrom wird über einen Zeitraum von 5-60 ms, vorzugsweise 10-50 ms gehalten, um die Schweißlinse SL in ihrer Form auszubilden. Die Stromstärke wird in einem Bereich von 10-50 kA eingestellt. In Abhängigkeit von dem Material der Materiallagen A, B, dem Material des Schweißhilfsfügeteils sowie den Dicken der Materiallagen A, B und der Dimension des Schweißhilfsfügeteils sind die Schweißparameter Strom und Schweißdauer einzustellen. Vorzugsweise liefern entsprechende Vorversuche (siehe oben) die material- und dimensionsangepassten Kraft- und Strom-Kennlinien für das Schweißen. Zur Verbesserung der Reproduzierbarkeit der Vielzahl von Schweißpunkten in der Serienfertigung können auch die in vorangegangenen Prozessabschnitten aufgenommenen Parameterwerte vergleichend ausgewertet werden.

Vorzugsweise wird im Schritt VIII eine Größe der Schweißlinse SL mithilfe einer reduzierten Stromstärke im Vergleich zum Schritt VII eingestellt. Die Stromstärke liegt unterhalb der Stromstärke I_{VII} aus dem Schritt VII und oberhalb der Stromstärke I_{VI} aus dem Schritt VI. In Abhängigkeit von der bereits oben angesprochenen Materialkombination und den vorliegenden Materiallagendicken und der Dimension des Schweißhilfsfügeteils wirkt die Stromstärke I_{VIII} über einen Zeitraum von 15-300 ms, vorzugsweise 25-250 ms.

Im Schritt IX wird vorzugsweise der Strom auf Null gefahren. Dies kann stetig oder in Form eines Abschaltvorgangs geschehen. Dadurch erfolgt keine weitere Wärmezufuhr in der Fügezone, sodass das Schweißhilfsfügeteil und die angrenzenden Materiallagen A, B abkühlen. Während der Abkühlphase wird die Klemmkraft F_{IX} auf einem konstanten Wert gehalten oder vorzugsweise erhöht. Eine Steigerung der Klemmkraft zwischen Stempel 12 und Gegenlager 14 unterstützt die Gefügeausbildung in der Schweißzone, um eine verlässliche Verbindung zu erhalten (siehe Bild e) in Fig. 2).

Abschließend wird der Stempel 12 vom Stapel der Materiallagen A, B wegbewegt, um die Materiallagen A, B mit Fügestelle zu entfernen.

Es wurde erkannt, dass Kraftnebenschlüsse in dem Stapel aus den Materiallagen A, B zu einer Verfälschung der Stempelkraft, des elektrischen Widerstands und weiterer Prozessparameter führen können. Kraftnebenschlüsse entstehen durch Formabweichungen der Materiallagen A, B, durch ein viskoelastisches Verhalten eines Klebstoffs zwischen den Materiallagen A, B oder durch Verschmutzung zwischen den Materiallagen A, B. Diese Kraftnebenschlüsse bewirken, dass die durch die Steuer-Regel-Einrichtung 20 über den Stempel 12 angesteuerte Kraft geringer ist als vorgegeben. Eine zu geringe Fügekraft des Stempels 12 beeinträchtigt jedoch die Qualität der herzustellenden Verbindung. Durch eine zu niedrige Stempelkraft erhöht sich bspw. die Wahrscheinlichkeit nachteiliger Schweißspritzer während des Verschweißens. Daher wird vorzugsweise der angesteuerte Kraftwert mit dem tatsächlich vorliegenden und durch den Kraftsensor 32 gemessenen Kraftwert verglichen und in der Auswerteeinrichtung 40 ein Kraftkorrekturwert im Rahmen der adaptiven Kraftregelung ermittelt. Dieser Korrekturwert wird über die Steuer-Regel-Einrichtung 20 an den Antrieb 16 des Stempels 12 übermittelt, um die für den Schweißvorgang erforderliche und angesteuerte Kraft zu erzielen.

Gemäß dem schematisch dargestellten Verfahrensablauf in Fig. 3 wird das Schweißhilfsfügeteil mithilfe eines Niederhalters NH gesetzt und verschweißt. Der Niederhalter NH dient vorzugsweise dem Aufbringen einer mechanischen Klemmkraft zum Fixieren der Materiallagen A, B. Es ist ebenfalls bevorzugt, über den Stempel 12 und den Niederhalter NH einen elektrisch Stromfluss und damit Wärme im Schweißhilfsfügeteil und in den angrenzenden Bereichen der Materiallagen A, B zu erzeugen, wie es in DE 10 2012 018 866 beschrieben ist. Die unterschiedlichen dort beschriebenen Konstruktionsalternativen von Stempel, Niederhalter und Gegenlager sind in Kombination mit dem oben beschriebenen Verfahren kombinierbar und umsetzbar. Das oben beschriebene Verbindungsverfahren läuft in gleicher Weise ab, wenn ein Niederhalter NH verwendet wird.

Es ist auch denkbar, die Wärmeerzeugung durch den Stromfluß über das Schweißhilfsfügeteil durch eine zusätzliche separate Wärmequelle elementnah zu unterstützen, um den Stromfluss durch das Schweißhilfsfügeteil in der Setz-/Umformphase zu begrenzen. Über eine Temperaturmessung an der elementnahen Oberfläche der Materiallage A können diese Werte dann zusätzlich für eine Anpassung der Strom- und Kraftregelverläufe der Steuer-Regel-Einrichtung 20 zugeführt werden.

### Bezugszeichenliste

- 10: Setz-Schweiß-Gerät
- 12: Stempel, Elektrodenstempel
- 14: Gegenlager
- 16: Antrieb des Stempels
- 18: Zuführeinrichtung
- 20: Steuer-Regel-Einrichtung
- 30: Erfassungseinrichtung
- 32: Kraftsensor
- 34: Messgerät
- 40: Auswerteeinrichtung
- 50: Schweißeinrichtung
- 52: Primärstromleitung
- 60: Schweißtransformator
- 62,64: Sekundärstromleitung
- 70: Erwärmungseinrichtung
- A, B: Materiallagen
- SL: Schweißlinse
- NH: Niederhalter
- F: Kraft
- I: Strom
- S: Fügerichtung
- T: optionale Temperaturmessung

## Patentansprüche

1. Ein kombiniertes Setz-Schweiß-Gerät (10), das ausgestaltet ist, um bolzenähnliche Schweißhilfsfügeteile in mindestens eine erste Materiallage (A) zu setzen und an einer zweiten Materiallage (B) aus elektrisch leitendem Material oder an einem elektrisch leitenden Bereich einer zweiten Materiallage (B) mechanisch-thermisch zu verformen und mit dieser durch einen Schweißvorgang im Kontaktbereich stoffschlüssig zu verbinden, wobei das Setz-Schweiß-Gerät (10) die folgenden Merkmale aufweist:
- einen angetriebenen Stempel (12), der mit einer Setzkraft von mindestens 5 kN, vorzugsweise mindestens 8 kN, gegen ein gegenüberliegend angeordnetes Gegenlager (14) bewegbar ist, während
- der Stempel (12) und das Gegenlager (14) elektrisch leitend und mit einer elektrischen Stromquelle verbindbar ausgebildet sind, so dass der Stempel (12) und das Gegenlager (14) jeweils eine Schweißelektrode bilden, und das kombinierte Setz-Schweiß-Gerät (10) ist **dadurch gekennzeichnet, dass** es weiterhin aufweist
- ein elektronisches Steuerungssystem des Setz-Schweiß-Geräts (10) mit einer kombinierten Steuer- und/oder Regeleinrichtung (20), so dass kombinierte mechanische und elektrische Lasten über den Stempel (12) und das Gegenlager (14) am Schweißhilfsfügeteil generierbar sind, wobei die kombinierten mechanischen und elektrischen Lasten ein mechanisch und thermisch unterstütztes Durchdringen der mindestens einen ersten Materiallage (A) und ein flächiges Verschweißen mit der zweiten Materiallage (B) gewährleisten.

2. Setz-Schweiß-Gerät (10) gemäß Anspruch 1, indem der Stempel (12) über einen elektrischen, hydraulischen oder pneumatischen Antrieb (16) bewegbar ist und mindestens ein Kraftsensor (32) vorgesehen ist, der eine Kraft des Stempels (12) auf das Schweißhilfsfügeteil erfasst und/oder mittels eines elektrischen Referenzsignals an eine Erfassungseinrichtung (30) für mechanische und elektrische Prozessdaten des elektronischen Steuerungssystems weiterleitet.

3. Setz-Schweiß-Gerät (10) gemäß Anspruch 1 oder 2, dessen elektronisches Steuerungssystem eine Schweißeinrichtung (50) umfasst, mit der ein steuerbarer oder regelbarer Schweißstrom zwischen Stempel (12) und Gegenlager (14) generierbar ist.

4. Setz-Schweiß-Gerät (10) gemäß Anspruch 1, 2 oder 3, dessen elektronisches Steuerungssystem eine Erwärmungseinrichtung (70) umfasst, mit der eine einstellbare Erwärmung des Schweißhilfsfügeteils und mindestens eines Teilbereichs mindestens einer Materiallage (A, B) zwischen Stempel (12) und Gegenlager (14) erzeugbar ist.

5. Setz-Schweiß-Gerät (10) gemäß Anspruch 3 oder 4, dessen Erfassungseinrichtung (30) eine Mehrzahl von Messeinrichtungen (34) umfasst, mit denen elektrische und mechanische Prozessdaten des Setz-Schweiß-Geräts (10), vorzugsweise Strom, Spannung, Kraft, Stempelweg, Temperatur, erfassbar und an die Erfassungseinrichtung (30) übertragbar sind.

6. Setz-Schweiß-Gerät (10) gemäß einem der vorhergehenden Ansprüche, das eine Auswerteeinrichtung (40) umfasst, mit der die erfassten mechanischen und elektrischen Prozessdaten auswertbar, mit Referenzkurven und/oder Kennwerttabellen vergleichbar und Korrekturwerte ermittelbar sind.

7. Setz-Schweiß-Gerät (10) gemäß einem der vorhergehenden Ansprüche, dessen Steuer-Regel-Einrichtung (20) anpassbare Steuerkurven für die mechanischen und elektrischen Prozessdaten des Stempels (12) und/oder des Gegenlagers (14) aufweist, die in Abhängigkeit von den erfassten mechanischen und elektrischen Prozessdaten der Erfassungseinrichtung (30) regelbar sind.

8. Setz-Schweiß-Gerät (10) gemäß Anspruch 6, dessen Steuer-Regel-Einrichtung (20) eine adaptive Kraftregelung des Stempels (12) aufweist, sodass mit Hilfe eines Kraftsensors (32) die am Stempel (12) anliegende Kraft erfasst und mit einem Kennwert vergleichend auswertbar ist, sodass ausgehend von der vergleichenden Auswertung eine Korrekturkraft nachsteuerbar ist.

9. Setz-Schweiß-Gerät (10) gemäß einem der vorhergehenden Ansprüche, das weiterhin eine Zuführeinrichtung für Schweißhilfsfügeteile aufweist, mit der Schweißhilfsfügeteile einzeln einer Fügeposition unter dem Stempel (12) zuführbar sind.

10. Setz-Schweiß-Gerät (10) gemäß Anspruch 9, dessen Zuführeinrichtung einen Niederhalter (NH) umfasst, der federnd oder mit einer steuerbaren Kraft angetrieben auf die erste Materiallage (A) aufsetzbar ist.

11. Setz-Schweiß-Gerät (10) gemäß Anspruch 9 oder 10, dessen Zuführeinrichtung, Schweiß- (50) und/oder Erwärmungseinrichtung (70) und dessen Steuer-Regel-Einrichtung (20) modular vorgesehen ist, so dass sie mit dem Setz-Schweiß-Gerät (10) oder mit einer Schweißzange oder einem Setzgerät kombinierbar ist.

12. Nachrüstsatz für ein Setzgerät, wobei der Nachrüstsatz umfasst:
- eine Erfassungseinrichtung (30) für mechanische und elektrische Prozessdaten,
- eine Schweißeinrichtung (50), mit der eine Schweißverbindung über einen Stempel (12) und ein Gegenlager (14) des Setzgeräts herstellbar ist,
- eine Erwärmungseinrichtung (70) und
- eine modulare Steuer-Regel-Einrichtung (20), so dass
- kombinierte mechanische und elektrische Lasten über den Stempel (12) und das Gegenlager (14) am Schweißhilfsfügeteil generierbar sind, wobei die kombinierten mechanischen und elektrischen Lasten ein mechanisch und thermisch unterstütztes Durchdringen der mindestens einen ersten Materiallage (A) und ein flächiges Verschweißen mit der zweiten Materiallage (B) gewährleisten.

13. Nachrüstsatz gemäß Anspruch 12, bei dem die modulare Steuer-Regel-Einrichtung (20) weiterhin umfasst:
- eine Zuführeinrichtung für Schweißhilfsfügeteile in Kombination mit einem Niederhalter (NH).

14. Kontinuierliches Verbindungsverfahren in Form eines mechanisch-thermischen Setz-Schweiß-Prozesses mit Hilfe eines bolzenähnlichen Schweißhilfsfügeteils für mindestens eine erste Materiallage (A) ohne Vorlochen der mindestens einen ersten Materiallage (A) mit mindestens einer zweiten Materiallage (B) aus schweißbarem Material oder mit einem Abschnitt aus schweißbarem Material, das die folgenden Schritte aufweist:
a. Eintreiben des Schweißhilfsfügeteils in die mindestens eine erste Materiallage mit einer kombinierten mechanisch-thermischen Belastung zumindest des Schweißhilfsfügeteils (II, III) vor einem Kontakt des Schweißhilfsfügeteils mit der mindestens einen zweiten Materiallage (B),
b. Deformieren (IV) des Schweißhilfsfügeteils unter kombinierter mechanisch-thermischer Belastung an der mindestens einen zweiten Materiallage (B) und
c. flächiges Verschweißen (VI, IX) des Schweißhilfsfügeteils mit der mindestens einen zweiten Materiallage (B), so dass die mindestens eine erste Materiallage (A) und die mindestens eine zweite Materiallage (B) über das Schweißhilfsfügeteil miteinander verbunden sind, wobei
d. während des Eintreibens, Deformierens und Verschweißens des Schweißhilfsfügeteils die durch den Stempel (12) auf das Schweißhilfsfügeteil aufgebrachte Kraft und der über den Stempel (12) durch das Schweißhilfsfügeteil geleitete elektrische Strom mit Hilfe von anpassbaren überlagerten Kraft- und Strom-Kennlinien in Abhängigkeit von der Zeit vorgegeben sind, um das Verbindungsverfahren kontinuierlich zu steuern, wobei
e. die durch den Stempel (12) aufgebrachte Kraft während des Eintreibens des Schweißhilfsfügeteils reduziert wird (III), wobei gleichzeitig eine im Schweißhilfsfügeteil durch elektrischen Strom erzeugte Wärme das Eintreiben des Schweißhilfsfügeteils unterstützt.

15. Verbindungsverfahren gemäß Anspruch 14, wobei die Kraft-Kennlinie und die Strom-Kennlinie aufeinander abgestimmt sind, um eine Einstellung optimierter Parameter für die Phasen "Eintreiben" und "Deformieren" bezogen auf Werkstoffeigenschaften des Schweißhilfsfügeteils und der mindestens einen ersten Materiallage zu erzielen und um eine energetische Überlastung des Materials des Schweißhilfsfügeteils und/oder des Materials der Materiallagen zu vermeiden.

16. Verbindungsverfahren gemäß Anspruch 14, wobei während des Deformierens die Kraft des Elektrodenstempels (12) reduziert und der im Schweißhilfsfügeteil fließende Strom (I) erhöht wird, so dass unter einer mechanischen Grundlast eine Formanpassung zwischen dem Schweißhilfsfügeteil und der mindestens einen ersten Materiallage (A) stattfindet.

17. Verbindungsverfahren gemäß Anspruch 14, mit dem weiteren Schritt:
Erfassen von mechanischen und elektrischen Prozessdaten, insbesondere Kraft, Stempelweg, elektrische Spannung, elektrischer Strom,
Vergleichen der erfassten Prozessdaten mit vorgegebenen Referenzkurven und/oder Kennwerttabellen und
Bestimmen von Steuerwerten für auf das Schweißhilfsfügeteil aufgebrachte mechanische und elektrische Lasten basierend auf dem auswertenden Vergleich zwischen den erfassten Prozessdaten und den Referenzkurven und/oder Kennwerttabellen.

18. Verbindungsverfahren gemäß einem der Ansprüche 14 - 17, mit dem Schritt:
gezieltes Umformen (IV) zumindest eines Spitzen- und/oder Schaftbereichs des Schweißhilfsfügeteils während des Eintreibens und Deformierens (II-IV) des Schweißhilfsfügeteils, sodass das Schweißhilfsfügeteil zur Ausbildung einer flächigen Schweißzone für das nachfolgende Verschweißen mit der mindestens einen zweiten Materiallage (B) vorbereitet ist.

19. Verbindungsverfahren gemäß Anspruch 18, wobei während des Umformens ein für ein Schweißverfahren ausreichend großer flächiger Bereich zwischen der mindestens einen zweiten Materiallage (B) und dem umgeformten Spitzenbereich des Schweißhilfsfügeteils erzeugt wird, in dem während des Verschweißens die Schweißzone entsteht.

20. Vorbereitungsverfahren für ein Verschweißen zwischen Schweißhilfsfügeteil und einer zweiten Materiallage (B) aus schweißbarem Material oder einer zweiten Materiallage (B) mit einem Abschnitt aus schweißbarem Material, das die folgenden Schritte aufweist:
gezieltes Umformen zumindest eines Spitzen- und/oder Schaftbereichs des Schweißhilfsfügeteils, wobei das Umformen erfolgt während eines Eintreibens in eine erste Materiallage und eines Deformierens des Schweißhilfsfügeteils mit Hilfe eines Stempels eines Setzgeräts, sodass das Schweißhilfsfügeteil für das nachfolgende Verschweißen mit der mindestens einen zweiten Materiallage (B) vorbereitet ist, wobei
das Eintreiben des Schweißhilfsfügeteils in die mindestens eine erste Materiallage mit einer kombinierten mechanisch-thermischen Belastung zumindest des Schweißhilfsfügeteils (II, III) vor einem Kontakt des Schweißhilfsfügeteils mit der mindestens einen zweiten Materiallage (B) erfolgt.

21. Vorbereitungsverfahren gemäß Anspruch 20, wobei während des Umformens ein für das Verschweißen ausreichend großer Grenzflächenbereich zwischen der mindestens einen zweiten Materiallage (B) und dem umgeformten Spitzenbereich des Schweißhilfsfügeteils erzeugt wird.

## Claims

1. A combined setting welding device (10) designed to set stud-like welding auxiliary joining parts in at least one first layer of material (A) and to mechanically-thermally deform these at a second layer of material (B) made of electrically conductive material or at an electrically conductive area of a second layer of material (B) and to connect these in a material-fit manner by a welding operation in the contact area, wherein the setting welding device (10) has the following features:
- a driven punch (12), which is movable with a setting force of at least 5 kN, preferably at least 8 kN, against an oppositely arranged counter support (14), wherein
- the punch (12) and the counter support (14) are designed electrically conductively and connectable with an electrical current source so that the punch (12) and the counter support (14) each form one welding electrode, and the combined setting welding device (10) is **characterized in that** it further comprises
- an electronic control system of the setting welding device (10) with a combined control and/or regulation device (20) so that combined mechanical and electrical loads are generatable via the punch (12) and the counter support (14) at the welding auxiliary joining part, wherein the combined mechanical and electrical loads ensure a mechanically and thermally supported penetration of the at least one first layer of material (A) and a planar welding with the second layer of material (B).

2. The setting welding device (10) according to claim 1, in which the punch (12) is movable via an electrical, hydraulic or pneumatic drive (16) and at least one force sensor (32) is provided, which senses a force of the punch (12) on the welding auxiliary joining part and/or forwards it by means of an electrical reference signal to a recording apparatus (30) for mechanical and electrical process data of the electronic control system.

3. The setting welding device (10) according to claim 1 or 2, the electronic control system of which comprises a welding apparatus (50), with which a controllable or regulatable welding current is generatable between punch (12) and counter support (14).

4. The setting welding device (10) according to claim 1, 2 or 3, the electronic control system of which comprises a heating apparatus (70), with which an adjustable heating of the welding auxiliary joining part and of at least one sub-portion of at least one layer of material (A, B) between the punch (12) and the counter support (14) is creatable.

5. The setting welding device (10) according to claim 3 or 4, the recording apparatus (30) of which comprises a plurality of measuring apparatuses (34), with which electrical and mechanical process data of the setting welding device (10), preferably current, voltage, force, punch path, temperature, are sense-able and transmittable to the recording apparatus (30).

6. The setting welding device (10) according to one of the preceding claims, which comprises an evaluation apparatus (40), with which the recorded mechanical and electrical process data is evaluable, comparable with reference curves and/or characteristic value tables and with which correction values are determinable.

7. The setting welding device (10) according to one of the preceding claims, the control/regulation apparatus (20) of which has adjustable control curves for the mechanical and electrical process data of the punch (12) and/or of the counter support (14) which are regulatable depending on the sensed mechanical and electrical process data from the recording apparatus (30).

8. The setting welding device (10) according to claim 6, the control/regulation apparatus (20) of which has an adaptive force regulation of the punch (12) so that the force applied to the punch (12) is sensed with the aid of a force sensor (32) and is evaluable with a characteristic value in a comparing manner so that a correction force is re-adjustable based on the comparative evaluation.

9. The setting welding device (10) according to one of the preceding claims, which also has a feed apparatus for welding auxiliary joining parts, with which welding auxiliary joining parts are feed-able individually to a joining position under the punch (12).

10. The setting welding device (10) according to claim 9, the feed apparatus of which comprises a hold down device (NH), which can be placed onto the first layer of material (A) in a flexible manner or driven with a controllable force.

11. The setting welding device (10) according to claim 9 or 10, the feed apparatus, welding apparatus (50) and/or heating apparatus (70) of which and control/regulation apparatus (20) of which is provided modularly so that they are combinable with the setting welding device (10) or with welding tongs or a setting device.

12. A retrofit kit for a setting device, wherein the retrofit kit comprises:
- a recording apparatus (30) for mechanical and electrical process data,
- a welding apparatus (50), with which a weld connection is establishable via a punch (12) and a counter support (14) of the setting device,
- a heating apparatus (70) and
- a modular control/regulation apparatus (20), so that
- combined mechanical and electrical loads via the punch (12) and the counter support (14) are generatable at the welding auxiliary joining part, wherein the combined mechanical and electrical loads ensure a mechanically and thermally supported penetration of the at least one first layer of material (A) and a planar welding with the second layer of material (B).

13. The retrofit kit according to claim 12, in which the modular control/regulation apparatus (20) further comprises:
- a feed apparatus for welding auxiliary joining parts in combination with a hold down device (NH).

14. A continuous connecting method in the form of a mechanical-thermal setting welding process with the aid of a stud-like welding auxiliary joining part for at least one first layer of material (A) without pre-punching the at least one first layer of material (A) with at least one second layer of material (B) made of weldable material or with a section made of weldable material, which has the following steps:
a. driving of the welding auxiliary joining part into the at least one first layer of material with a combined mechanical-thermal load of at least the welding auxiliary joining part (II, III) before a contact of the welding auxiliary joining part with the at least one second layer of material (B),
b. deforming (IV) of the welding auxiliary joining part under combined mechanical-thermal load at the at least one second layer of material (B) and
c. planar welding (VI, IX) of the welding auxiliary joining part with the at least one second layer of material (B) so that the at least one first layer of material (A) and the at least one second layer of material (B) are interconnected via the welding auxiliary joining part, wherein
d. during the driving in, deforming and welding of the welding auxiliary joining part, the force applied on the welding auxiliary joining part by the punch (12) and the electrical current directed through the welding auxiliary joining part via the punch (12) are predefined with the aid of adjustable superimposed force and current characteristics lines depending on the time in order to continuously control the connecting method, wherein
e. the force applied by the punch (12) is reduced (III) during the driving in of the welding auxiliary joining part, wherein at the same time a heat generated in the welding auxiliary joining part by electrical current supports the driving in of the welding auxiliary joining part.

15. The connecting method according to claim 14, wherein the force characteristic line and the current characteristic line are coordinated with respect to each other in order to achieve an adjustment of optimized parameters for the "driving in" and "deforming" phases with respect to material properties of the welding auxiliary joining part and of the at least one first layer of material and in order to avoid an energy-related overload of the material of the welding auxiliary joining part and/or of the material of the layers of material.

16. The connecting method according to claim 14, wherein the force of the electrode punch (12) is reduced during the deforming and the current (I) flowing in the welding auxiliary joining part is increased so that, under the mechanical base load, a shape adjustment takes place between the welding auxiliary joining part and the at least one first layer of material (A).

17. The connecting method according to claim 14, with the further step:
sensing mechanical and electrical process data, in particular force, punch path, electrical voltage, electrical current,
comparing the sensed process data with specified reference curves and/or characteristic value tables and
determining control values for mechanical and electrical loads applied to on the welding auxiliary joining part based on the evaluating comparison between the sensed process data and the reference curves and/or characteristic value tables.

18. The connecting method according to one of claims 14 - 17 with the step:
specific reshaping (IV) of at least one tip and/or shaft portion of the welding auxiliary joining part during the driving in and deforming (II-IV) of the welding auxiliary joining part so that the welding auxiliary joining part is prepared for formation of a planar welding zone for the subsequent welding with the at least one second layer of material (B).

19. The connecting method according to claim 18, wherein, during the reshaping, a planar area sufficiently large for a welding process is generated between the at least one second layer of material (B) and the reshaped tip portion of the welding auxiliary joining part, in which the welding zone is created during the welding.

20. A preparation method for a welding between a welding auxiliary joining part and a second layer of material (B) made of weldable material or a second layer of material (B) with a section made of weldable material, which has the following steps:
specific reshaping of at least one tip and/or shaft portion of the welding auxiliary joining part, wherein the reshaping takes place during a driving in into a first layer of material and a deforming of the welding auxiliary joining part with the aid of a punch of a setting device, so that the welding auxiliary joining part is prepared for the subsequent welding with the at least one second layer of material (B), wherein
the driving of the welding auxiliary joining part into the at least one first layer of material with a combined mechanical-thermal load of at least the welding auxiliary joining part (II, III) takes place before a contact of the welding auxiliary joining part with the at least one second layer of material (B).

21. The preparation method according to claim 20, wherein, during the reshaping, a sufficiently large interface area for the welding is created between the at least one second layer of material (B) and the reshaped tip portion of the welding auxiliary joining part.

## Revendications

1. Appareil de placement et de soudage combiné (10), conçu pour placer des pièces de jonction d'aide au soudage similaires à des boulons dans au moins une première couche de matériau (A) et pour déformer celles-ci de façon mécanique-thermique au niveau d'une deuxième couche de matériau (B) constituée d'un matériau électriquement conducteur ou d'une région électriquement conductrice d'une deuxième couche de matériau (B) et pour les relier à celle-ci par liaison de matière dans la zone de contact à l'aide d'un processus de soudage, l'appareil de placement et de soudage (10) présentant les caractéristiques suivantes :
- un tampon entraîné (12), déplaçable contre une butée (14) disposée en face de celui-ci, avec une force de placement d'au moins 5 kN, avantageusement d'au moins 8 kN, tandis que
- le tampon (12) et la butée (14) sont conçus de façon électriquement conductrice et de manière à pouvoir être reliés à une source de courant électrique, de telle façon que le tampon (12) et la butée (14) forment respectivement une électrode de soudage, et l'appareil de placement et de soudage combiné (10) est **caractérisé en ce qu'**il présente en outre
- un système de commande électronique de l'appareil de placement et de soudage (10), avec un dispositif de commande et/ou de réglage combiné (20), de sorte que des charges mécaniques et électriques combinées peuvent être générées sur la pièce de jonction d'aide au soudage par le biais du tampon (12) et de la butée (14), les charges mécaniques et électriques combinées garantissant un passage assisté mécaniquement et thermiquement à travers l'au moins une première couche de matériau (A) et un soudage surfacique avec la deuxième couche de matériau (B).

2. Appareil de placement et de soudage (10) selon la revendication 1, dans lequel le tampon (12) est déplaçable à l'aide d'un entraînement électrique, hydraulique ou pneumatique (16) et dans lequel il est prévu au moins un capteur de force (32) détectant une force du tampon (12) sur la pièce de jonction d'aide au soudage et/ou transmettant celle-ci à un dispositif de détection (30) pour des données de processus mécaniques et électriques du système de commande électronique à l'aide d'un signal de référence électrique.

3. Appareil de placement et de soudage (10) selon la revendication 1 ou 2, dont le système de commande électronique comporte un dispositif de soudage (50) permettant de générer un courant de soudage commandable ou réglable entre le tampon (12) et la butée (14).

4. Appareil de placement et de soudage (10) selon la revendication 1, 2 ou 3, dont le système de commande électronique comporte un dispositif de chauffage (70) permettant de produire un chauffage réglable de la pièce de jonction d'aide au soudage et d'au moins une région partielle d'au moins une couche de matériau (A, B) entre le tampon (12) et la butée (14).

5. Appareil de placement et de soudage (10) selon la revendication 3 ou 4, dont le dispositif de détection (30) comporte une pluralité de dispositifs de mesure (34) permettant de détecter des données de processus électriques et mécaniques de l'appareil de placement et de soudage (10), avantageusement le courant, la tension, la force, la course de tampon, la température, et de les transmettre au dispositif de détection (30).

6. Appareil de placement et de soudage (10) selon l'une des revendications précédentes, lequel comporte un dispositif d'évaluation (40) permettant d'évaluer les données de processus électriques et mécaniques détectées, de comparer celles-ci avec des courbes de référence et/ou des tableaux de valeurs caractéristiques et de déterminer des valeurs de correction.

7. Appareil de placement et de soudage (10) selon l'une des revendications précédentes, dont le dispositif de commande-réglage (20) présente des courbes de commandes adaptables pour les données de processus électriques et mécaniques du tampon (12) et/ou de la butée (14), lesquelles peuvent être ajustées en fonction des données de processus électriques et mécaniques détectées du dispositif de détection (30).

8. Appareil de placement et de soudage (10) selon la revendication 6, dont le dispositif de commande-réglage (20) présente un réglage de force adaptif du tampon (12), de sorte que la force exercée sur le tampon (12) peut être détectée à l'aide d'un capteur de force (32) et évaluée par comparaison avec une valeur caractéristique, de telle façon qu'une force de correction peut être commandée sur la base de l'évaluation comparative.

9. Appareil de placement et de soudage (10) selon l'une des revendications précédentes, présentant en outre un dispositif d'amenée pour des pièces de jonction d'aide au soudage, avec lequel des pièces de jonction d'aide au soudage peuvent être amenées séparément vers une position de jonction sous le tampon (12).

10. Appareil de placement et de soudage (10) selon la revendication 9, dont le dispositif d'amenée comporte un abaisseur (NH) susceptible d'être placé de façon élastique ou en étant entraîné par une force commandable sur la première couche de matériau (A).

11. Appareil de placement et de soudage (10) selon la revendication 9 ou 10, dont le dispositif d'amenée, le dispositif de soudage (50) et/ou le dispositif de chauffage (70) et le dispositif de commande-réglage (20) de celui-ci sont prévus de façon modulaire, de manière à pouvoir être combinés avec l'appareil de placement et de soudage (10) ou avec une pince de soudage ou un appareil de placement.

12. Kit d'adaptation pour un appareil de placement, le kit d'adaptation comportant :
- un dispositif de détection (30) pour des données de processus électriques et mécaniques,
- un dispositif de soudage (50) permettant de réaliser un assemblage par soudage par le biais d'un tampon (12) et d'une butée (14) de l'appareil de placement,
- un dispositif de chauffage (70) et
- un dispositif de commande-réglage modulaire (20), de telle façon que
- des charges mécaniques et électriques combinées peuvent être générées sur la pièce de jonction d'aide au soudage par le biais du tampon (12) et de la butée (14), les charges mécaniques et électriques combinées garantissant un passage soutenu mécaniquement et thermiquement à travers l'au moins une première couche de matériau (A) et un soudage surfacique avec la deuxième couche de matériau (B).

13. Kit d'adaptation selon la revendication 12, dans lequel le dispositif de commande-réglage modulaire (20) comporte en outre :
- un dispositif d'amenée pour des pièces de jonction d'aide au soudage en combinaison avec un abaisseur (NH).

14. Procédé d'assemblage en continu sous la forme d'un processus de placement et de soudage mécanique-thermique utilisant une pièce de jonction d'aide au soudage semblable à un boulon, pour au moins une première couche de matériau (A) sans perçage préalable de l'au moins une première couche de matériau (A) avec au moins une deuxième couche de matériau (B) d'un matériau soudable ou avec une section de matériau soudable, présentant les étapes suivantes :
a. enfoncement de la pièce de jonction d'aide au soudage dans l'au moins une première couche de matériau avec une charge mécanique-thermique combinée au moins sur la pièce de jonction d'aide au soudage (I, II) avant un contact de la pièce de jonction d'aide au soudage avec l'au moins une deuxième couche de matériau (B),
b. déformation (IV) de la pièce de jonction d'aide au soudage sous une charge mécanique-thermique combinée sur l'au moins une deuxième couche de matériau (B) et
c. soudage surfacique (VI, IX) de la pièce de jonction d'aide au soudage avec l'au moins une deuxième couche de matériau (B), de manière à relier entre elles l'au moins une première couche de matériau (A) et l'au moins une deuxième couche de matériau (B) par le biais de la pièce de jonction d'aide au soudage, dans lequel
d. pendant l'enfoncement, la déformation et le soudage de la pièce de jonction d'aide au soudage, la force exercée par le tampon (12) sur la pièce de jonction d'aide au soudage et le courant électrique conduit à travers la pièce de jonction d'aide au soudage par biais du tampon (12) sont prédéfinis en fonction du temps à l'aide de caractéristiques de force et de courant superposées et adaptables, afin de commander le procédé d'assemblage de façon continue, dans lequel
e. la force exercée par le tampon (12) pendant l'enfoncement de la pièce de jonction d'aide au soudage est réduite (III), l'enfoncement de la pièce de jonction d'aide au soudage étant simultanément soutenu par une chaleur produite dans la pièce de jonction d'aide au soudage par un courant électrique.

15. Procédé d'assemblage selon la revendication 14, dans lequel la caractéristique de force et la caractéristique de courant sont coordonnées pour obtenir un réglage de paramètres optimaux pour les phases « d'enfoncement » et de « déformation » par rapport des propriétés de matériau de la pièce de jonction d'aide au soudage et de l'au moins une première couche de matériau, et pour éviter une surcharge énergétique du matériau de la pièce de jonction d'aide au soudage et/ou du matériau des couches de matériau.

16. Procédé d'assemblage selon la revendication 14, dans lequel, pendant la déformation, la force du tampon d'électrode (12) est réduite et le courant (I) traversant la pièce de jonction d'aide au soudage est augmenté, de manière à obtenir une adaptation de forme entre la pièce de jonction d'aide au soudage et l'au moins une première couche de matériau (A) sous une charge de base mécanique.

17. Procédé d'assemblage selon la revendication 14, comprenant l'étape supplémentaire suivante :
- détection de données de processus électriques et mécaniques, en particulier la force, la course de tampon, la tension électrique, le courant électrique,
- comparaison des données de processus détectées avec des courbes de référence prédéfinies et/ou des tableaux de valeurs caractéristiques, et
- détermination de valeurs de commande pour les charges mécaniques et électriques appliquées à la pièce de jonction d'aide au soudage, sur la base de la comparaison évaluative entre les données de processus détectées et les courbes de référence et/ou les tableaux de valeurs caractéristiques.

18. Procédé d'assemblage selon l'une des revendications 14 à 17, comprenant l'étape suivante :
- façonnage ciblé (IV) d'au moins une région de pointe et/ou de tige de la pièce de jonction d'aide au soudage pendant l'enfoncement et la déformation (II-IV) de la pièce de jonction d'aide au soudage, de manière à préparer la pièce de jonction d'aide au soudage à la formation d'une zone de soudage surfacique pour le soudage consécutif avec l'au moins une deuxième couche de matériau (B).

19. Procédé d'assemblage selon la revendication 18, dans lequel, pendant le façonnage, une région surfacique suffisamment étendue pour un procédé de soudage est réalisée entre l'au moins une deuxième couche de matériau (B) et la région de pointe façonnée de la pièce de jonction d'aide au soudage, dans laquelle est créée la zone de soudage pendant le soudage.

20. Procédé de préparation pour un soudage entre une pièce de jonction d'aide au soudage et une deuxième couche de matériau (B) d'un matériau soudable ou une deuxième couche de matériau (B) avec une section d'un matériau soudable, présentant les étapes suivantes :
- façonnage ciblé d'au moins une région de pointe et/ou de tige de la pièce de jonction d'aide au soudage, le façonnage étant réalisé pendant une enfoncement dans une première couche de matériau et une déformation de la pièce de jonction d'aide au soudage à l'aide d'un tampon d'un appareil de placement, de manière à préparer la pièce de jonction d'aide au soudage pour le soudage consécutif avec l'au moins une deuxième couche de matériau (B), dans lequel
- l'enfoncement de la pièce de jonction d'aide au soudage dans l'au moins une première couche de matériau est réalisé avec une charge mécanique-thermique combinée au moins sur la pièce de jonction d'aide au soudage (II, III) avant un contact de la pièce de jonction d'aide au soudage avec l'au moins une deuxième couche de matériau (B).

21. Procédé de préparation selon la revendication 20, dans lequel, pendant le façonnage, une région d'interface suffisamment grande pour le soudage est créée entre l'au moins une deuxième couche de matériau (B) et la région de pointe façonnée de la pièce de jonction d'aide au soudage.
